# EUROPEAN PATENT SPECIFICATION

(11) **EP 2 693 149 B1**
(45) Date of publication and mention of the grant of the patent: **01.07.2015**
(21) Application number: 13173965.8
(22) Date of filing: 27.06.2013
(51) Int. Cl.: F28F 9/013

(54) **Heat exchanger, gap expansion jig of heat transfer tube, and method of disposing vibration suppression member**
Wärmetauscher, Fugendehnungsvorrichtung eines Wärmeübertragungsrohrs und Verfahren zur Anordnung eines Schwingungsunterdrückungselements
Échangeur de chaleur, gabarit d'expansion d'entrefer d'un tube de transfert de chaleur et procédé de disposition d'élément de suppression de vibration

(30) Priority: 02.08.2012 JP 2012172247; 09.08.2012 JP 2012177505; 31.08.2012 JP 2012192532; 31.08.2012 JP 2012192533
(43) Date of publication of application: 05.02.2014
(73) Proprietor: MITSUBISHI HEAVY INDUSTRIES, LTD., Tokyo 108-8215 (JP)
(72) Inventor: Shimizu, Hiroshi, TOKYO 108-8215 (JP); Fujiwara, Yoshihisa, TOKYO 108-8215 (JP); Hamamoto, Tomochika, TOKYO, 108-8215 (JP); Kawanishi, Kenichi, TOKYO 108-8215 (JP); Otake, Ikuo, TOKYO 108-8215 (JP); Fujiwara, Hiroyuki, TOKYO 108-8215 (JP); Matsubara, Masahito, TOKYO 108-8215 (JP); Iwamoto, Yoichi, TOKYO 108-8215 (JP); Sasajima, Keisuke, TOKYO 108-8215 (JP); Mizuno, Kotoyo, TOKYO 108-8215 (JP); Nagase, Ryuichi, TOKYO 108-8215 (JP)
(74) Representative: Intès, Didier Gérard André

(56) References cited:
- WO-A1-2009/120350
- WO-A1-2012/063661
- WO-A1-2012/063662
- JP-A- S61 291 896
- US-A1- 2012 145 370

## Description

### Field

The present invention relates to a gap expansion jig for a heat exchanger which has a plurality of heat transfer tubes inside and a method of disposing vibration suppression members. An expansion jig as disclosed in the preamble of claim 1 is disclosed in US 2012/0145370 or in WO 2012/063661 for example.

### Background

Conventionally, a steam generator is known which has a plurality of heat transfer tubes inside (see, for example, Patent Literature 1). Each heat transfer tube provided in the steam generator is formed into a U shape, and allows a fluid such as a coolant to circulate inside the heat transfer tube. When the fluid circulates inside the heat transfer tube, vibration (fluid excited vibration) is caused by circulation of the fluid at an arc portion of the U-shaped heat transfer tube. Hence, in the steam generator, anti-vibration bars as vibration suppression members are inserted in gaps between heat transfer tubes as arc portions. Further, when the inserted vibration suppression members abut on the heat transfer tubes, fluid excited vibration is suppressed.

Meanwhile, the anti-vibration bars disclosed in Patent Literature 1 expand gaps between a plurality of heat transfer tubes. That is, the anti-vibration bars are inserted in the gaps between the heat transfer tubes, then expands the widths of the anti-vibration bars slightly wider than the gaps between the heat transfer tubes and are placed in contact with the heat transfer tubes.
Patent Literature 2 discloses an inflatable spreading tool for increasing a distance between adjacent elongated members such as heat transfer tubes.

### Citation List

### Patent Literature

Patent Literature 1: Japanese Laid-open Patent Publication No. 61-291896
Patent Literature 2: United States Patent Application Publication No. 2012/0145370

### Summary

### Technical Problem

Meanwhile, the vibration suppression members are arranged on both sides of the heat transfer tubes and are inserted in gaps between neighboring heat transfer tubes. Normally, the vibration suppression members arranged on both sides of the heat transfer tubes are at the same position in an axial direction. In this case, a gap between heat transfer tubes is not necessarily fixed due to a dimension tolerance such as a variation in a heat transfer tube flatness degree at an arc portion. Meanwhile, the heat transfer tube flatness degree refers to a difference between a maximum outer diameter and a minimum diameter in one cross section of the heat transfer tube orthogonal to a longitudinal direction. Therefore, part of vibration suppression members of a plurality of vibration suppression members do not abut on the vibration suppression members, and therefore gaps are produced between the vibration suppression members and the heat transfer tubes. In this case, suppressing vibration of the heat transfer tubes becomes difficult, and therefore vibration is likely to place the heat transfer tubes and the vibration suppression members in contact and contact portions are likely to be abraded.

Further, bar-shaped vibration suppression members are used as vibration suppression members which are additionally provided in some cases. In this case, to place the vibration suppression members and the heat transfer tubes in contact, the vibration suppression members having substantially the same thickness as the gaps between the heat transfer tubes are preferably inserted. In this case, a gap between heat transfer tubes is not necessarily fixed due to a dimension tolerance such as a variation in a heat transfer tube flatness degree at an arc portion. Hence, the gaps between the heat transfer tubes become narrower than the thickness of the vibration suppression members in some case, and, in these cases, inserting the vibration suppression members in the gaps between the heat transfer tubes is difficult.

It is therefore an object of the present invention is to provide a gap expansion jig of heat transfer tubes and a method of disposing vibration suppression members which can suitably insert the vibration suppression members in gaps between neighboring heat transfer tubes and suitably suppress vibration of a plurality of heat transfer tubes.

### Solution to Problem

According to an aspect of the present disclosure, a heat exchanger includes: a plurality of heat transfer tubes which is arranged and provided with a predetermined gap; and at least one pair of vibration suppression members which is provided in the gap and is provided on both sides sandwiching the heat transfer tubes. The one vibration suppression member and the other vibration suppression member of the pair of the vibration suppression members are provided at different positions in an axial direction of the heat transfer tubes, the one vibration suppression member is provided pressing the heat transfer tubes, and the other vibration suppression member is provided pressing the heat transfer tubes from an opposite side of the one vibration suppression member.

According to this configuration, a pair of vibration suppression members can alternately press each heat transfer tube along this axial direction. Consequently, a pair of vibration suppression members can contact each heat transfer tube without a gap and, consequently, a pair of vibration suppression members can suitably suppress vibration of each heat transfer tube. Consequently, it is possible to reduce abrasion at contact portions between the heat transfer tubes and the vibration suppression members.

Advantageously, in the heat exchanger, a plurality of vibration suppression members is provided in the gap, the plurality of vibration suppression members comprises a plurality of existing first vibration suppression members and a plurality of second vibration suppression members which is newly and additionally provided, and the second vibration suppression members provided on both sides sandwiching each of the heat transfer tubes are provided at different positions in an axial direction of each of the heat transfer tubes.

According to this configuration, by newly and additionally providing the second vibration suppression members to the existing first vibration suppression members, a plurality of vibration suppression members can alternately press each heat transfer tube along this axial direction. Consequently, only by additionally providing the second vibration suppression members, a plurality of vibration suppression members can contact each heat transfer tube without a gap and, consequently, can suitably suppress vibration of each heat transfer tube.

Advantageously, in the heat exchanger, lengths of the second vibration suppression members in a width direction which is a direction in which the neighboring heat transfer tubes face each other are longer than those of the first vibration suppression members.

According to this configuration, the second vibration suppression members which are additionally provided can be made broader than the first vibration suppression members. Consequently, when the first vibration suppression members and the second vibration suppression members are disposed in the gaps between the heat transfer tubes, the second vibration suppression members can push out the gaps compared to the first vibration suppression members, that is, further press the heat transfer tubes compared to the first vibration suppression members. Consequently, the second vibration suppression members which are newly and additionally provided can actively press the heat transfer tubes, and suitably suppress vibration of each heat transfer tube.

Advantageously, in the heat exchanger, cross sections of the second vibration suppression members cut in a plane orthogonal to an insertion direction in which the second vibration suppression members are inserted in the gap are formed in a rectangular shape.

According to this configuration, the contact portions between the heat transfer tubes and the second vibration suppression members can be placed in line contact, so that it is possible to expand the contact portions and distribute a load of pressing of the second vibration suppression members against the heat transfer tubes.

Advantageously, in the heat exchanger, cross sections of the second vibration suppression members cut in a plane orthogonal to an insertion direction in which the second vibration suppression members are inserted in the gap are formed in a circular shape.

According to this configuration, the contact portions between the heat transfer tubes and the second vibration suppression members are placed in point contact, so that it is possible to make the contact portions smaller and reduce friction resistance upon insertion of the second vibration suppression members.

Advantageously, in the heat exchanger, the second vibration suppression members are formed in a tapered shape which is tapered from a rear end side to a front end side in an insertion direction in which the second vibration suppression members are inserted in the gap.

According to this configuration, the front end side in the insertion direction is thin, so that the second vibration suppression members can be easily inserted in the gaps between the heat transfer tubes.

A gap expansion jig of a heat transfer tube according to the present invention is defined in appended claim 1 and expands a gap to insert a vibration suppression member which suppresses vibration of the heat transfer tube, in the gap between neighboring heat transfer tubes.

According to this configuration, it is possible to expand the gaps between the heat transfer tubes and insert the vibration suppression members.

The gap expansion jig of the heat transfer tube according to the invention includes: a jig main body which includes a shape memory material which is arranged in the gap between the neighboring heat transfer tubes and expandably deform in the gap by being heated; and a temperature adjusting unit which can adjust a temperature of the jig main body.

According to this configuration, the temperature adjusting unit heats the jig main body, so that it is possible to deform the jig main body including the shape memory material such that the gaps between the heat transfer tubes expand. In this state, it is possible to insert the vibration suppression members in the gaps between the heat transfer tubes, and suitably insert the vibration suppression members. In addition, the temperature adjusting unit may cool the jig main body. In this case, it is possible to quickly cool the jig main body compared to natural cooling of the jig main body and, consequently, cancel expansion of the gaps between the heat transfer tubes by more quickly narrowing the jig main body.

In the gap expansion jig of the heat transfer tube according to the present invention, the jig main body becomes smaller than the gap before heating by the temperature adjusting unit, and becomes larger than the gap after heating by the temperature adjusting unit.

According to this configuration, it is possible to insert the jig main body before heating, in the gaps between the heat transfer tubes. Further, by heating the jig main body, it is possible to reliably expand the gaps between the heat transfer tubes.

Advantageously, in the gap expansion jig of the heat transfer tube, the jig main body extends in a longitudinal direction, and is bent in a center of a width direction orthogonal to the longitudinal direction, and the temperature adjusting unit widens in the width direction both end portions of the jig main body in the width direction by heating the jig main body.

According to this configuration, the jig main body employs a simple configuration, and the temperature adjusting unit heats the jig main body and widens in the width direction the both end portions of the jig main body in the width direction, so that it is possible to suitably expand the gaps between the heat transfer tubes.

Advantageously, in the gap expansion jig of the heat transfer tube, the temperature adjusting unit is a heater provided along the longitudinal direction of the jig main body, and the heater is provided inside a bent portion formed by bending the jig main body.

According to this configuration, by providing a heater inside the bent portion in the center of the width direction, it is possible to heat the jig main body from the center of the width direction to the end portions. Consequently, it is possible to make a temperature distribution of the heated jig main body uniform and suitably deform the jig main body.

Advantageously, in the gap expansion jig of the heat transfer tube, the temperature adjusting unit is a flat heater comprising flexibility and a thin flat shape, and the flat heater is provided over an entire inner side of the bent jig main body.

According to this configuration, it is possible to uniformly heat the entire jig main body, and, consequently, heat the jig main body with a little heat quantity and suitably deform the jig main body.

Advantageously, in the gap expansion jig of the heat transfer tube, both end portions of the jig main body in the width direction are formed in a curved surface.

According to this configuration, even when the both end portions of the jig main body in the width direction contact the heat transfer tubes, it is possible to expand the gaps between the heat transfer tubes without damaging the heat transfer tubes. Further, for example, a buffer is not used, so that, even when the gaps between the heat transfer tubes are narrow, it is possible to suitably insert the jig main body.

Advantageously, in the gap expansion jig of the heat transfer tube, the jig main / body comprises an accommodation groove which is formed at one end portion in at least the width direction and which can accommodate the heat transfer tube.

According to this configuration, when the both end portions of the jig main body in the width direction are widened to contact the heat transfer tubes and expand the gaps between the heat transfer tubes, it is possible to accommodate the heat transfer tubes in the accommodation grooves. Consequently, it is possible to position the jig main body with respect to the heat transfer tubes and stably expand the gaps between the heat transfer tubes. In addition, by forming the accommodation grooves at one end portion of the jig main body in the width direction and flatly forming the other end portion of the jig main body in the width direction, it is possible to insert the other end portion of the jig main body as a guide upon insertion of the jig main body to the gaps between the heat transfer tubes.

According to still another aspect of the present disclosure, a method of disposing a vibration suppression member includes disposing the vibration suppression member in a gap between neighboring heat transfer tubes.

According to this configuration, it is possible to dispose the vibration suppression members in the gaps between neighboring heat transfer tubes.

Advantageously, in the method of disposing the vibration suppression member, for additionally providing a second vibration suppression member to an existing heater exchanger including a plurality of heat transfer tubes which is arranged and provided with the gap, and a plurality of first vibration suppression members which is provided in the gap, the plurality of first vibration suppression members is provided on both sides sandwiching each of the heat transfer tubes, and is provided at an identical position in an axial direction of each of the heat transfer tubes, and a plurality of second vibration suppression members are provided on the both sides sandwiching each of the heat transfer tubes, is provided between the neighboring first vibration suppression members in the axial direction of the heat transfer tubes and is provided at different positions in the axial direction of each of the heat transfer tubes.

According to this configuration, the second vibration suppression members are newly and additionally provided in the existing heat exchanger which has a plurality of heat transfer tubes and a plurality of first vibration suppression members, so that a plurality of second vibration suppression members can alternately press each heat transfer tube along the axial direction. Consequently, only by additionally providing the second vibration suppression members, a plurality of second vibration suppression members can contact each heat transfer tube without a gap and, consequently, can suitably suppress vibration of each heat transfer tube. Consequently, it is possible to reduce abrasion at contact portions between the heat transfer tubes and the vibration suppression members.

Advantageously, the method of disposing the vibration suppression member further includes: a member vibration step of vibrating the vibration suppression member; and a member inserting step of inserting the vibration suppression member in the gap while vibrating the vibration suppression member.

According to this configuration, it is possible to expand the gaps between the heat transfer tubes while vibrating the vibration suppression members. Consequently, the vibration suppression members can reduce abrasion caused by the heat transfer tubes upon insertion by way of vibration, so that it is possible to easily insert the vibration suppression members in the gaps between the heat transfer tubes.

Advantageously, in the method of disposing the vibration suppression member,
a plurality of vibration suppression members is provided in the gap, the plurality of vibration suppression members comprises existing first vibration suppression members and second vibration suppression members which are newly and additionally provided, the second vibration suppression member is vibrated in the member vibrating step, and the second vibration suppression members are inserted in the gap in the member inserting step.

According to this configuration, it is possible to insert the second vibration suppression members which are newly and additionally provided, in the gaps between the heat transfer tubes while vibrating the second vibration suppression members and, consequently, reduce abrasion with the heat transfer tubes upon insertion and easily insert the second vibration suppression members.

Advantageously, in the method of disposing the vibration suppression member, lengths of the second vibration suppression members in a width direction which is a direction in which the neighboring heat transfer tubes face each other are longer than those of the first vibration suppression members.

According to this configuration, by inserting the second vibration suppression members in the gaps between the heat transfer tubes while vibrating the second vibration suppression members, it is possible to insert the second vibration suppression members broader than the first vibration suppression members. Further, when the first vibration suppression members and the second vibration suppression members are disposed in the gaps between the heat transfer tubes, the second vibration suppression members can push out the gaps compared to the first vibration suppression members, that is, press the heat transfer tubes compared to the first vibration suppression members. Consequently, the second vibration suppression members which are newly and additionally provided can actively press the heat transfer tubes, and suitably suppress vibration of each heat transfer tube.

Advantageously, in the method of disposing the vibration suppression member, in the member vibrating step, the vibration suppression member is vibrated by making a vibration generator abut on the vibration suppression member from a direction orthogonal to an insertion direction of the vibration suppression member.

According to this configuration, vibration can be generated by the vibration generator as vibration of a lateral wave traveling in the insertion direction of the vibration suppression members.

Advantageously, in the method of disposing the vibration suppression member, in the member vibrating step, the vibration suppression member is vibrated by making a vibration generator abut on the vibration suppression member from a direction identical to an insertion direction of the vibration suppression member.

According to this configuration, the vibration direction of vibration of the vibration suppression members which is generated by the vibration generator becomes vibration of a longitudinal wave traveling in the insertion direction.

Advantageously, in the method of disposing the vibration suppression member,
the vibration generator can press the vibration suppression member in the insertion direction, and in the member inserting step, the vibration suppression member is pressed in the insertion direction while being Vibrated by the vibration generator.

According to this configuration, it is possible to push the vibration suppression member in the gaps between the heat transfer tubes while vibrating the vibration suppression members by the vibration generator, and easily insert the vibration suppression members.

Advantageously, the method of disposing the vibration suppression member, further includes a lubricant applying step of applying a lubricant to the vibration suppression member upon insertion of the vibration suppression member in the member inserting step.

Consequently, the vibration suppression members can further reduce abrasion caused by the heat transfer tubes upon insertion by means of a lubricant, so that it is possible to easily insert the vibration suppression members in the gaps between the heat transfer tubes.

According to the present invention, a method of disposing a vibration suppression member which suppresses vibration of a heat transfer tube in a gap between neighboring heat transfer tubes using any one of the gap expansion jig of the heat transfer tube is defined in appended claim 7. It includes: a jig inserting step of inserting the gap expansion jig in the gap between the neighboring heat transfer tubes; a gap expansion step of heating the jig main body by the temperature adjusting unit and expanding the gap by the jig main body; a member inserting step of inserting the vibration suppression member in the expanded gap; an expansion canceling step of cooling the jig main body and canceling the expansion of the gap by the jig main body; and a jig pulling-out step of pulling the gap expansion jig out of the gap.

According to this configuration, it is possible to expand the gaps between the heat transfer tubes using the gap expansion jig and insert the vibration suppression members in the expanded gaps between the heat transfer tubes. Consequently, it is possible to suitably insert the vibration suppression members.

According to still another aspect of the present disclosure, a method of disposing a vibration suppression member which disposes the vibration suppression member which suppresses vibration of a heat transfer tube in a gap between neighboring heat transfer tubes using any one of the gap expansion jig of the heat transfer tube, the method includes: a jig inserting step of inserting in the gap between the heat transfer tubes the jig main body such that the short portion is in the direction in which the heat transfer tubes face each other; a gap expanding step of inserting in the gap between the heat transfer tubes the jig main body such that the long portion is in the direction in which the heat transfer tubes face each other; a member inserting step of inserting the vibration suppression member in the expanded gap; and a jig pulling-out step of pulling the gap expansion jig out of the gap.

According to this configuration, it is possible to expand the gaps between the heat transfer tubes by rotating the gap expansion jig and insert the vibration suppression members in the expanded gaps between the heat transfer tubes. Consequently, it is possible to suitably insert the vibration suppression members.

Advantageously, in the method of disposing the vibration suppression member, further includes an expansion canceling step of, before the jig pulling-out step, canceling expansion of the gap by rotating the jig main body such that the short portion is in the direction in which the heat transfer tubes face in the gap between the heat transfer tubes.

According to this configuration, it is possible to cancel expansion of the gaps between the heat transfer tubes by rotating the gap expansion jig, and easily pull out the gap expansion jig in the jig pulling-out step.

### Brief Description of Drawings

FIG. 1 is a side cross-sectional schematic view of a steam generator according to a first embodiment.
FIG. 2 is a plan view schematic diagram of a heat transfer tube bundle.
FIG. 3 is an A-A cross-sectional view of FIG. 2.
FIG. 4 is a perspective schematic view of the heat transfer tube bundle.
FIG. 5 is a plan view of part of the heat transfer tube bundle seen from the above.
FIG. 6 is a plan view of part of the heat transfer tube bundle before second vibration suppression members are disposed seen from the above.
FIG. 7 is a plan view of part of a heat transfer tube bundle of a steam generator according to a second embodiment seen from the above.
FIG. 8 is a plan view of part of a heat transfer tube bundle of a steam generator according to a third embodiment seen from the above.
FIG. 9 is a trihedral figure of a second vibration suppression member disposed in a heat transfer tube bundle of a steam generator according to a fourth embodiment.
FIG. 10 is a plan view of part of a heat transfer tube bundle of a steam generator according to a fifth embodiment seen from the above.
FIG. 11 is a flowchart related to a method of additionally disposing vibration suppression members.
FIG. 12 is an A-A cross-sectional view of FIG. 2.
FIG. 13 is a perspective schematic view of the heat transfer tube bundle.
FIG. 14 is an axial cross-sectional view of a heat transfer tube bundle in a center plane.
FIG. 15 is a perspective view of a gap expansion jig before heating according to a sixth embodiment.
FIG. 16 is a perspective view of a gap expansion jig before heating according to the sixth embodiment.
FIG. 17 is an explanatory view of an example related to a method of disposing vibration suppression members using a gap expansion jig according to the sixth embodiment.
FIG. 18 is an explanatory view of an example related to a method of disposing the vibration suppression members using the gap expansion jig according to the sixth embodiment.
FIG. 19 is an explanatory view of an example related to a method of disposing the vibration suppression members using the gap expansion jig according to the sixth embodiment.
FIG. 20 is an explanatory view of an example related to a method of disposing the vibration suppression members using the gap expansion jig according to the sixth embodiment.
FIG. 21 is an explanatory view of an example related to a method of disposing the vibration suppression members using the gap expansion jig according to the sixth embodiment.
FIG. 22 is an explanatory view of an example related to the method of disposing the vibration suppression members using the gap expansion jig according to the sixth embodiment.
FIG. 23 is a flowchart related to a method of disposing vibration suppression members.
FIG. 24 is a perspective view of a gap expansion jig according to a seventh embodiment.
FIG. 25 is a cross-sectional view of a jig main body of a gap expansion jig according to an eighth embodiment.
FIG. 26 is a plan view of a gap expansion jig according to a ninth embodiment.
FIG. 27 is a cross-sectional view of a jig main body before deformation of a gap expansion jig according to a tenth embodiment.
FIG. 28 is a cross-sectional view of the jig main body after deformation of the gap expansion jig according to the tenth embodiment.
FIG. 29 is a cross-sectional view of a jig main body before deformation of a gap expansion jig according to an eleventh embodiment.
FIG. 30 is a cross-sectional view of the jig main body after deformation of the gap expansion jig according to the eleventh embodiment.
FIG. 31 is an axial cross-sectional view of a heat transfer tube bundle in a center plane.
FIG. 32 is a schematic configuration diagram schematically illustrating a gap expansion jig according to a twelfth embodiment.
FIG. 33 is an explanatory view of an example related to a method of disposing vibration suppression members using a gap expansion jig according to the twelfth embodiment.
FIG. 34 is an explanatory view of an example related to the method of disposing the vibration suppression members using the gap expansion jig according to the twelfth embodiment.
FIG. 35 is an explanatory view of an example related to the method of disposing the vibration suppression members using the gap expansion jig according to the twelfth embodiment.
FIG. 36 is an explanatory view of an example related to the method of disposing the vibration suppression members using the gap expansion jig according to the twelfth embodiment.
FIG. 37 is an explanatory view of an example related to the method of disposing the vibration suppression members using the gap expansion jig according to the twelfth embodiment.
FIG. 38 is an explanatory view of an example related to the method of disposing the vibration suppression members using the gap expansion jig according to the twelfth embodiment.
FIG. 39 is a flowchart related to a method of disposing the vibration suppression members.
FIG. 40 is a schematic configuration diagram schematically illustrating a gap expansion jig according to a thirteenth embodiment.
FIG. 41 is a schematic configuration diagram schematically illustrating a gap expansion jig according to a fourteenth embodiment.
FIG. 42 is an explanatory view of an example related to a method of disposing vibration suppression members using a gap expansion jig according to the fourteenth embodiment.
FIG. 43 is an explanatory view of an example related to the method of disposing the vibration suppression members using the gap expansion jig according to the fourteenth embodiment.
FIG. 44 is a schematic configuration diagram schematically illustrating a gap expansion jig according to a fifteenth embodiment.
FIG. 45 is a schematic configuration diagram schematically illustrating a gap expansion jig according to a sixteenth embodiment.
FIG. 46 is an explanatory view of an example related to a method of disposing vibration suppression members using the gap expansion jig according to the sixteenth embodiment.
FIG. 47 is an explanatory view of an example related to the method of disposing the vibration suppression members using the gap expansion jig according to the sixteenth embodiment.
FIG. 48 is a schematic configuration diagram schematically illustrating a gap expansion jig according to a seventeenth embodiment.
FIG. 49 is an explanatory view of an example related to the method of disposing the vibration suppression members using the gap expansion jig according to the seventeenth embodiment.
FIG. 50 is an explanatory view of an example related to the method of disposing the vibration suppression members using the gap expansion jig according to the seventeenth embodiment.
FIG. 51 is an explanatory view of an example related to the method of disposing the vibration suppression members using the gap expansion jig according to the seventeenth embodiment.
FIG. 52 is an explanatory view illustrating a method of inserting vibration suppression members according to an eighteenth embodiment.
FIG. 53 is an explanatory view illustrating a method of inserting vibration suppression members according to a nineteenth embodiment.
FIG. 54 is an explanatory view illustrating a method of inserting vibration suppression members according to a twentieth embodiment.
FIG. 55 is a flowchart related to a method of inserting vibration suppression members.

### Description of Embodiments

Hereinafter, embodiments according to the present invention will be described in detail based on drawings. In addition, these embodiments by no means limit the present invention. Further, components according to the following embodiments include simple components which can be replaced by one of ordinary skill in art or substantially same components.

### [First Embodiment]

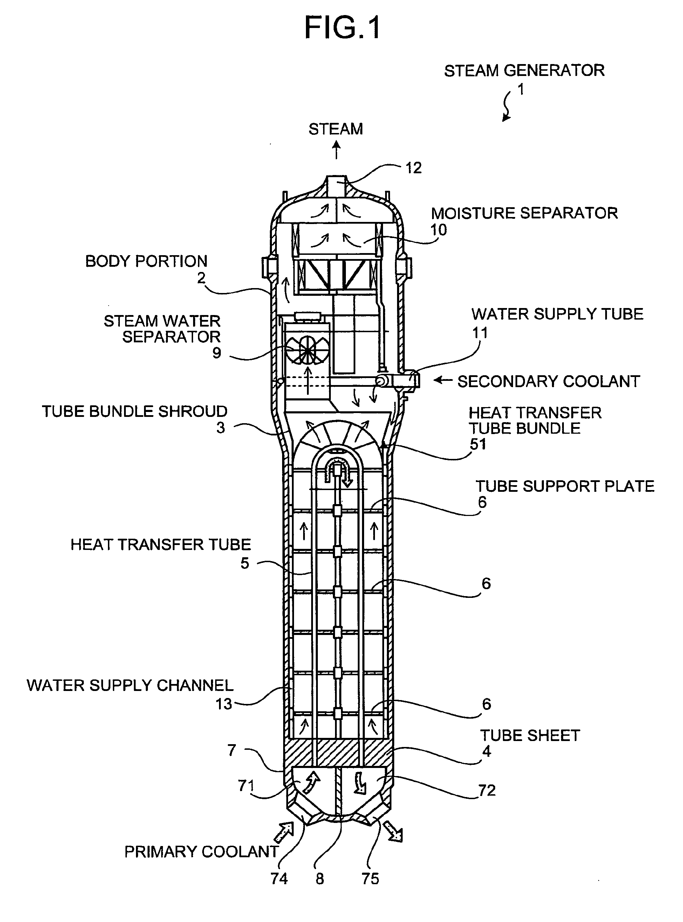

FIG. 1 is a side cross-sectional schematic view of a steam generator according to a first embodiment, which is not claimed and is included for better understanding of the invention. A heat exchanger which has a plurality of heat transfer tubes inside is, for example, a steam generator 1 used for a pressurized water reactor (PWR). In this steam generator 1, a primary coolant (for example, light water) as a nuclear reactor coolant and a neutron moderator circulating in the nuclear reactor, and a secondary coolant circulating in a turbine flow. Further, the steam generator 1 thermally exchanges the primary coolant of a high temperature and a high pressure with the secondary coolant to evaporate the secondary coolant, generate steam and cool the primary coolant of the high temperature and the high pressure.

The steam generator 1 has a hollow cylindrical shape which extends in an up and down direction and which is sealed. The steam generator 1 has a body portion 2 in which a lower half portion has a slightly smaller diameter than an upper half portion. The body portion 2 has in the lower half portion a tube bundle shroud 3 which is arranged a predetermined interval from an inner wall surface of the body portion and which has a cylindrical shape. A lower end portion of this tube bundle shroud 3 extends to a vicinity of a tube sheet 4 arranged below in the lower half portion of the body portion 2. In the tube bundle shroud 3, a heat transfer tube bundle 51 is provided. The heat transfer tube bundle 51 is formed with a plurality of heat transfer tubes 5 which forms inverted U shapes. Each heat transfer tube 5 is arranged such that a U-shaped arc portion is convex toward an upper side, the tube sheet 4 is supported by the both end portions on a lower side and an intermediate portion is supported by the tube bundle shroud 3 through a plurality of tube support plates 6. In the tube support plate 6, multiple penetration holes (not illustrated) are formed, and each heat transfer tube 5 is inserted in these penetration holes.

In the lower end portion of the body portion 2, a channel head 7 is provided. The channel head 7 is partitioned into an inlet chamber 71 and an outlet chamber 72 by a partition wall 8 inside. One end portion of each heat transfer tube 5 communicates to the inlet chamber 71, and the other end portion of each heat transfer tube 5 communicates to the outlet chamber 72. Further, an inlet nozzle 74 which communicates to an outside of the body portion 2 is formed in the inlet chamber 71, and an outlet nozzle 75 which communicates to the outside of the body portion 2 is formed in the outlet chamber 72. Furthermore, the inlet nozzle 74 is coupled with a cooling water piping (not illustrated) to which the primary coolant is conveyed from the pressurized water reactor, and the outlet nozzle 75 is coupled with a cooling water piping (not illustrated) which conveys the thermally exchanged primary coolant to the pressurized water reactor.

In the upper half portion of the body portion 2, a steam water separator 9 which separates the thermally exchanged secondary coolant to steam (vapor phase) and hot liquid (liquid phase), and a moisture separator 10 which removes moisture of the separated steam and places the moisture in an almost dried steam state. Between the steam water separator 9 and the heat transfer tube bundle 51, a water supply tube 11 which supplies water to the secondary coolant is inserted in the body portion 2 from the outside. Further, at an upper end portion of the body portion 2, a steam vent 12 is formed. Furthermore, in the lower half portion of the body portion 2, a water supply channel 13 which allows the secondary coolant supplied from the water supply tube 11 to this body portion 2 to flow down between the body portion 2 and the tube bundle shroud 3, turn around at the tube sheet 4 and go up along the heat transfer tube bundle 51. In addition, the steam vent 12 is coupled with the cooling water piping (not illustrated) which conveys steam to a turbine, and the water supply tube 11 is coupled with the cooling water tube (not illustrated) which supplies the secondary coolant the steam of which is used in the turbine and is cooled by a condenser (not illustrated).

In this steam generator 1, the primary coolant heated in the pressurized water reactor is conveyed to the inlet chamber 71, circulates passing through the multiple heat transfer tubes 5 and reaches the outlet chamber 72. Meanwhile, the secondary coolant cooled in the condenser is conveyed to the water supply tube 11, passes in the water supply channel 13 in the body portion 2 and goes up along the heat transfer tube bundle 51. In this case, in the body portion 2, the primary coolant of the high pressure and the high temperature and the secondary coolant are thermally exchanged. Further, the cooled primary coolant is returned from the outlet chamber 72 to the pressurized water reactor. Meanwhile, the secondary coolant which is thermally exchanged with the primary coolant of the high pressure and the high temperature goes up in the body portion 2, and is separated to steam and a hot liquid by the steam water separator 9. Further, moisture is removed from the separated steam by the moisture separator 10, and then the steam is conveyed to the turbine.

In the steam generator 1 formed in this way, when the primary coolant passes in each heat transfer tube 5, fluid excited vibration occurs at the inversed U-shaped arc portion. Hence, at the arc portions of the heat transfer tubes 5, a plurality of vibration suppression members 14 which suppresses vibration of the heat transfer tubes 5 is provided.

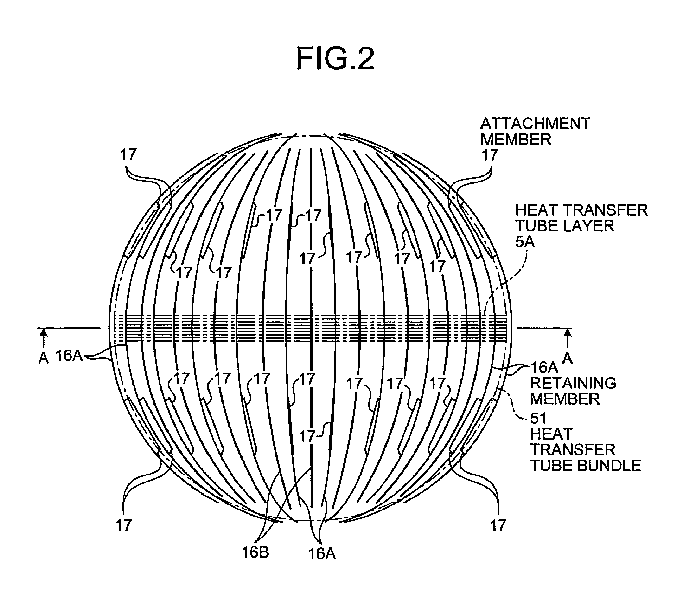

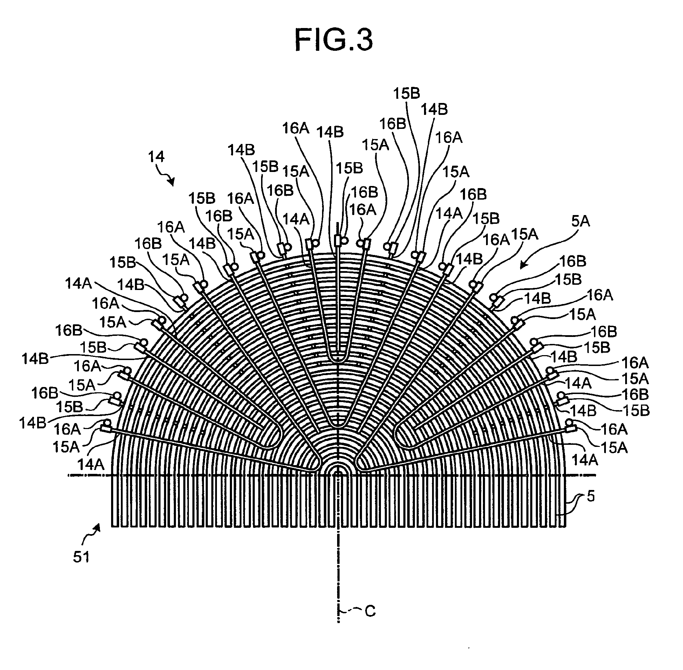

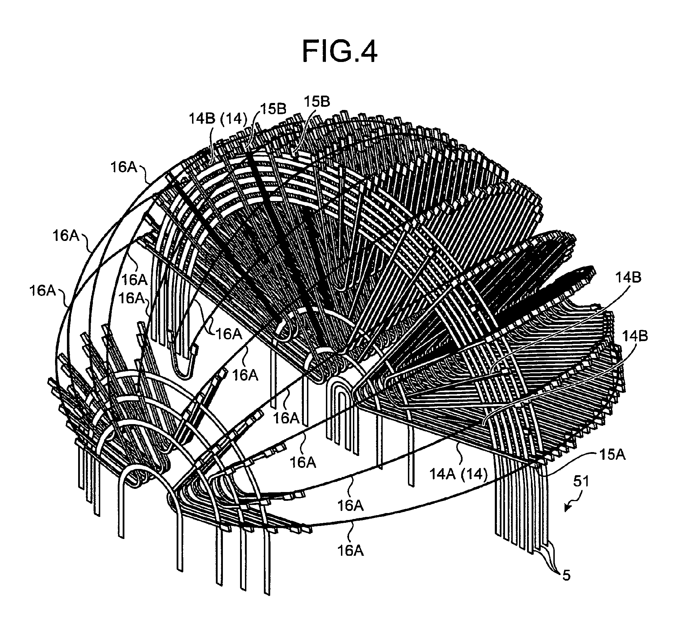

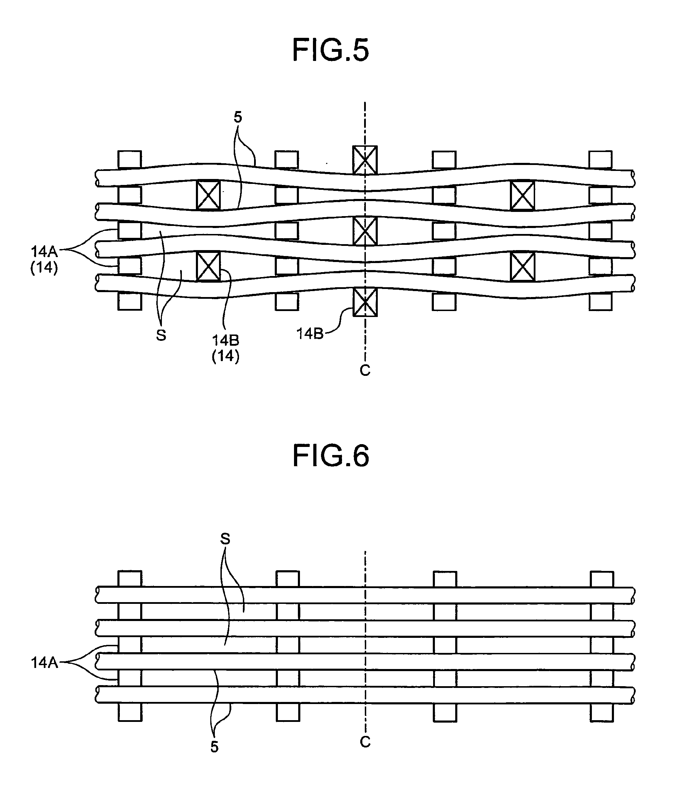

FIG. 2 is a plan view schematic diagram of the heat transfer tube bundle. FIG. 3 is an A-A cross-sectional view of FIG. 2. FIG. 4 is a perspective schematic view of the heat transfer tube bundle. FIG. 5 is a plan view of part of the heat transfer tube bundle seen from the above. FIG. 6 is a plan view of part of the heat transfer tube bundle before the second vibration suppression members are disposed seen from the above.

The upper end portion of the heat transfer tube bundle 51 is formed in a semispherical shape when the arc portions of a plurality of heat transfer tubes 5 which forms the inversed U shape are arranged. That is, as illustrated in FIG. 3, each heat transfer tube 5 is bent at a predetermined curvature radius in a plane. Hence, the heat transfer tubes 5 are symmetrically formed sandwiching a center plane C which is an axial cross section of the heat transfer tubes 5 which passes the tops which are the centers of the arc portions and pass the centers of the curvature radius. Further, a plurality of heat transfer tubes 5 is provided such that the curvature radius increases toward an outside of the curvature radius in the radial direction in each plane, and is provided in parallel in the axial direction to form heat transfer tube layers 5A.

Furthermore, as illustrated in FIG. 2, the heat transfer tube layers 5A are arranged and provided in parallel with predetermined gaps in an off-plane direction orthogonal to this plane. The curvature radii of the heat transfer tubes 5 of a plurality of heat transfer tube layers 5A on an outermost side of the curvature radii in the radial direction in the plane become smaller toward an outer side of the off-plane direction. When a plurality of heat transfer tubes 5 is arranged in this way, the upper end portion of the heat transfer tube bundle 51 is formed in a semispherical shape.

As illustrated in FIG. 4, a plurality of vibration suppression members 14 is inserted between a plurality of heat transfer tube layers 5A arranged in parallel. Each vibration suppression member 14 is made of a metal material such as stainless steel. A plurality of vibration suppression members 14 has a plurality of first vibration suppression members 14A which is disposed upon assembly of the steam generator 1 and a plurality of second vibration suppression members 14B which is disposed after the assembly of the steam generator 1 (for example, after the steam generator 1 is installed). In addition, FIG. 4 illustrates part of the second vibration suppression members 14B which are additionally provided, and an arrangement illustrated in FIG. 4 is not limited thereto.

As illustrated in FIG. 3, the first vibration suppression member 14A is formed by bending in a substantially V shape a bar body which forms a rectangular cross section. The first vibration suppression member 14A is arranged such that the folded bent portion is positioned on a center side (inner side) of the curvature radius in the radial direction of the heat transfer tube 5, and both end portions of the first vibration suppression member are positioned outside the radial direction. The both end portions of the first vibration suppression members 14A project outward from the outermost heat transfer tube 5 of the curvature radius in the radial direction.

Further, as illustrated in FIG. 3, a plurality of first vibration suppression members 14A includes large V-shaped first vibration suppression members 14A and small V-shaped first vibration suppression members 14A. Furthermore, on inner sides of the large V-shaped first vibration suppression members 14A, the small V-shaped first vibration suppression members 14A are arranged to form pairs. For example, three pairs of the first vibration suppression members 14A are disposed in the gaps between the two neighboring (stacked) heat transfer tube layers 5A in the off-plane direction. The three pairs of the first vibration suppression members 14A are provided in the circumferential direction of the curvature radius. That is, a pair of first vibration suppression members 14A of the three pairs is provided in the center such that the bent portions are positioned on the center plane C, and a pair of first vibration suppression members 14A is provided on both sides of a center pair of the first vibration suppression members 14A.

As described above, a plurality of first vibration suppression members 14A is disposed, so that, as illustrated in FIG. 4, the end portions of a plurality of first vibration suppression members 14A is aligned and arranged in a row in the off-plane direction of the heat transfer tube layers 5A, that is, in a direction in which the heat transfer tubes 5 face each other along the arc of the semispherical shape of the heat transfer tube bundle 51. Further, a plurality of rows of the end portions of the first vibration suppression members 14A to be aligned are disposed at predetermined intervals along the arc of the semispherical shape of the heat transfer tube bundle 51 and along the in-plane direction of the heat transfer tube layers 5A. That is, the end portions of the first vibration suppression members 14A provided on both sides sandwiching each heat transfer tube 5 are provided at the same position in the axial direction of each heat transfer tube 5, so that the end portions of a plurality of first vibration suppression members 14A is arranged in a lattice pattern.

Further, as illustrated in FIGS. 5 and 6, the end portions of a plurality of first vibration suppression members 14A are arranged in a lattice pattern, so that the gaps between the heat transfer tube layers 5A are multiply partitioned in the axial direction of the heat transfer tubes 5 and are multiply partitioned in a direction in which the heat transfer tubes 5 are aligned. That is, the gaps between the heat transfer tube layers 5A are partitioned into a plurality of areas S to form a lattice pattern. Hence, the gaps between the heat transfer tube layers 5A are defined by the first vibration suppression members 14A.

At the both end portions of each first vibration suppression member 14A, joint members 15A are provided. As illustrated in FIGS. 2 to 4, this joint member 15A is jointed to a retaining member 16A described below. In addition, the joint member 15A is made of a metal material such as stainless steel.

As illustrated in FIGS. 2 and 4, the retaining member 16A is a bar body formed in an arc shape along an outer periphery of the semispherical shape of the heat transfer tube bundle 51. The retaining members 16A are arranged to connect the end portions of the first vibration suppression members 14A aligned in one row along the arc of the semispherical shape of the heat transfer tube bundle 51. Further, the joint member 15A provided at the end portion of each first vibration suppression member 14A is jointed to this retaining member 16A by way of, for example, welding. Furthermore, an attachment member 17 described below is jointed to this retaining member 16A by way of, for example, welding.

The attachment member 17 is formed in substantially a U shape, and is inserted between the heat transfer tube 5 on the outermost side of the curvature radius in the radial direction and the heat transfer tube 5 on an inner side of the outermost heat transfer tube 5. Further, both end portions of the attachment member 17 are jointed to the retaining members 16A by way of, for example, welding, and the retaining member 16A is attached to the heat transfer tube bundle 51.

In addition, although the V shaped first vibration suppression members 14A are used, cuboid-shaped (linear-shaped) first vibration suppression members may be used or V shaped first vibration suppression members and cuboid shaped first vibration suppression members may be used in combination, and the first vibration suppression members are not limited in particular.

As illustrated in FIGS. 3 and 5, the second vibration suppression member 14B is a bar body of a cuboid shape (linear shape) which has a rectangular cross section. That is, the cross section of the second vibration suppression member 14B which is cut in the plane orthogonal to the insertion direction in which the second vibration suppression member is inserted in the gap is formed in a rectangular shape. The second vibration suppression member 14B is arranged such that the longitudinal direction of the second vibration suppression member is the same direction as the radial direction of the curvature radius. That is, the second vibration suppression member 14B is arranged such that one end portion in this longitudinal direction is positioned on a center side (inner side) of the curvature radius of the heat transfer tube 5 in the radial direction, and the other end portion in the longitudinal direction is positioned outside the radial direction. Hence, with the second vibration suppression member 14B, one end portion side in the longitudinal direction is a front end side in the insertion direction and the other end side in the longitudinal direction is a rear end side in the insertion direction, and therefore the one end side is first inserted in the gap between the heat transfer tubes 5. Further, the other end portion of the second vibration suppression member 14B projects outward from the heat transfer tube 5 on the outermost side of the curvature radius in the radial direction.

For example, eleven of a plurality of second vibration suppression members 14B are disposed in two gaps formed on both sides (a front and rear direction in FIG. 3) of the predetermined heat transfer tube layers 5A in the off-plane direction, and are arranged between a plurality of first vibration suppression members 14A. More specifically, three of the 11 second vibration suppression members 14B are provided to each of one pair of first vibration suppression members 14A, and two are provided between three pairs of the first vibration suppression members 14A. The three second vibration suppression members 14B which are provided to one pair of first vibration suppression members 14A are provided on an inner side of the small V shaped first vibration suppression member 14A. The rest of the two second vibration suppression members 14B are provided between the both end portions of the small V shaped first vibration suppression member 14A and the both end portions of the large V shaped first vibration suppression member 14A. Further, the two second vibration suppression members 14B provided between three pairs of the first vibration suppression members 14A are provided between a pair of first vibration suppression members 14A provided in the center and two pairs of first vibration suppression members 14A provided on both sides of one pair.

Five of these 11 second vibration suppression members 14B are provided in one gap (in the front in FIG. 3), and six are provided in the other gap (in the rear in FIG. 3). The five second vibration suppression members 14B provided in one gap include the three second vibration suppression members 14B provided on the inner side of the small V shaped first vibration suppression member 14A, and the two second vibration suppression members 14B provided between three pairs of the first vibration suppression members 14A. The six second vibration suppression members 14B provided in the other gap include the six second vibration suppression members 14B provided between the both end portions of the small V shaped first vibration suppression members 14A and both end portions of the large V shaped first vibration suppression members 14A.

Hence, as illustrated in FIGS. 3 and 5, the 11 second vibration suppression members 14B are provided on both sides sandwiching each heat transfer tube 5 in the two gaps formed on the both sides of the predetermined heat transfer tube layers 5A in the off-plane direction, and are alternately arranged at predetermined intervals along the axial direction of the heat transfer tubes 5. In other words, the second vibration suppression members 14B provided on the both sides sandwiching each heat transfer tube 5 are provided at different positions in the axial direction of the heat transfer tubes 5. That is, a plurality of second vibration suppression members 14B is arranged in a zig-zag pattern.

In this case, the lengths of the second vibration suppression members 14B in the width direction which is a direction in which the neighboring heat transfer tubes 5 face each other, that is, the lengths in the off-plane direction are made longer than the lengths of the first vibration suppression members 14A in the width direction. That is, the second vibration suppression members 14B are formed broader than the first vibration suppression members 14A.

As described above, as illustrated in FIG. 5, a plurality of first vibration suppression members 14A is arranged in the lattice pattern, a plurality of second vibration suppression members 14B is arranged in the zig-zag pattern and the second vibration suppression members 14B are formed broader than the first vibration suppression members 14A. Hence, one second vibration suppression members 14B and the other second vibration suppression members 14B of a plurality of second vibration suppression members 14B are provided at different positions in the axial direction of the heat transfer tubes 5 sandwiching the heat transfer tubes 5, and the one second vibration suppression members 14B are provided pressing the heat transfer tubes 5 and the other second vibration suppression member 14B are provided pressing the heat transfer tubes 5 from the side opposite to the one second vibration suppression members 14B. By this means, a plurality of second vibration suppression members 14B at the different positions in the axial direction of the heat transfer tubes 5 can alternately press each heat transfer tube 5 in the direction in which the heat transfer tubes 5 face each other, that is, the off-plane direction of the heat transfer tube layers 5A. In other words, each heat transfer tube 5 is alternately pressed along the axial direction of the heat transfer tubes 5 by a plurality of second vibration suppression members 14B provided on both sides of each heat transfer tube 5.

Meanwhile, the cross sections of the second vibration suppression members 14B are formed in rectangular shapes, and each heat transfer tube 5 is a round tube, so that the second vibration suppression members 14B and the heat transfer tubes 5 are placed in line contact. In addition, although FIG. 5 illustrates that each heat transfer tube 5 pressed by a plurality of second vibration suppression members 14B is distorted in an S shape, this illustration is directed to plainly describing the event that the heat transfer tubes 5 are pressed, and the actual heat transfer tubes 5 are not distorted unlike FIG. 5.

When a plurality of second vibration suppression members 14B is disposed as described above, although not illustrated, the end portions of a plurality of second vibration suppression members 14B are aligned and arranged in a row in the off-plane direction of the heat transfer tube layers 5A along the arc of the semispherical shape of the heat transfer tube bundle 51 similar to the first vibration suppression members 14A. Further, a plurality of rows of the end portions of the second vibration suppression members 14B to be aligned is disposed at predetermined intervals along the arc of the semispherical shape of the heat transfer tube bundle 51 and along the in-plane direction of the heat transfer tube layers 5A.

The other end portion (the end portion on the outer side in the radial direction) of each second vibration suppression member 14B is provided with the joint member 15B. As illustrated in FIGS. 2 and 3, this joint member 15B is jointed to a retaining member 16B described below. In addition, the joint member 15B is made of a metal material such as stainless steel.

As illustrated in FIG. 2, the retaining member 16B is a bar body formed in an arc shape along an outer periphery of the semispherical shape of the heat transfer tube bundle 51 substantially similar to the retaining member 16A. The retaining members 16B are arranged to connect the end portions of the second vibration suppression members 14B aligned in one row along the arc of the semispherical shape of the heat transfer tube bundle 51. Hence, the retaining members 16B are arranged between the neighboring retaining members 16A. Further, the joint member 15B provided at the other end portion of each second vibration suppression member 14B is jointed to this retaining member 16B by way of, for example, welding.

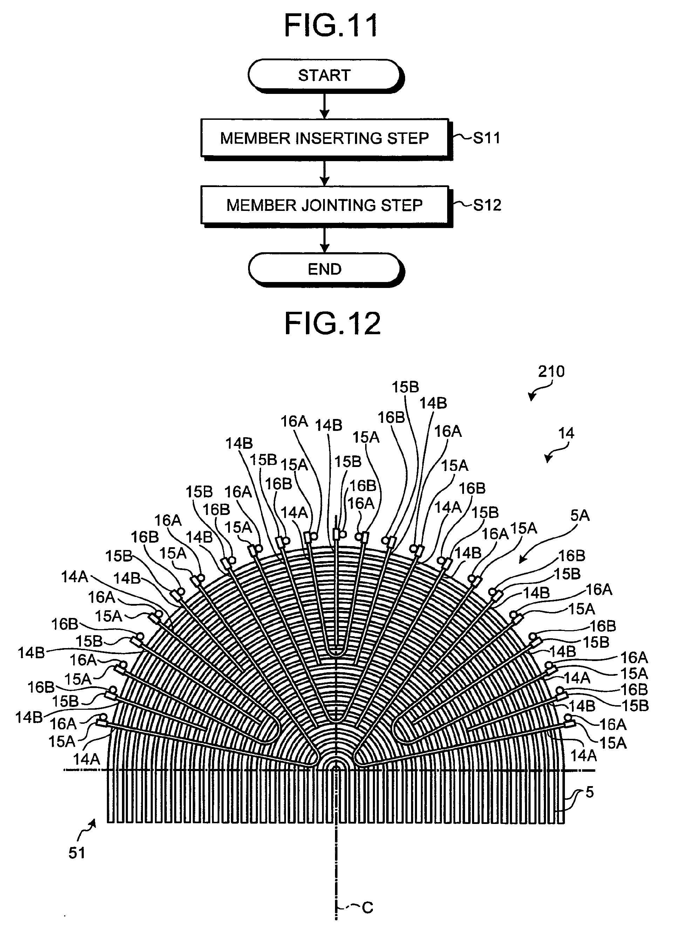

Next, a vibration suppression member disposing method (additionally providing method) of newly and additionally providing a plurality of second vibration suppression members 14B to the installed existing steam generator 1 will be described with reference to FIGS. 5, 6 and 11. FIG. 11 is a flowchart related to a method of additionally disposing vibration suppression members.

As illustrated in FIG. 6, in the heat transfer tube bundle 51 in the existing steam generator 1 before disposition of the second vibration suppression members 14B, a plurality of heat transfer tube layers 5A (only the outermost heat transfer tubes 5 are illustrated in FIG. 6) is disposed with predetermined gaps, so that a plurality of heat transfer tubes 5 becomes parallel. Further, a plurality of V-shaped first vibration suppression members 14A is provided in the gaps between the neighboring heat transfer tube layers 5A, so that the end portions of a plurality of first vibration suppression members 14A are arranged in the lattice pattern. Furthermore, the gaps between the neighboring heat transfer tube layers 5A are partitioned into a plurality of areas S of a lattice pattern by the end portions of a plurality of first vibration suppression members 14A provided in the lattice pattern.

As illustrated in FIG. 5, a plurality of second vibration suppression members 14B is inserted in the zig-zag pattern to a plurality of areas S which forms the lattice pattern (member inserting step: step S11 in FIG. 11). More specifically, the second vibration suppression members 14B are inserted in the predetermined gaps between the heat transfer tube layers 5A, and then are inserted in the predetermined gaps between the neighboring heat transfer tube layers 5A in the off-plane direction. Further, by repeating this insertion a plurality of times, a plurality of second vibration suppression members 14B is arranged in the zig-zag pattern in a plurality of areas S which forms the lattice pattern.

First, in the predetermined gaps between the heat transfer tube layers 5A, the second vibration suppression members 14B are inserted such that the areas S in which the second vibration suppression members 14B are inserted and the areas S in which the second vibration suppression members 14B are not inserted are alternately provided in the axial direction of the heat transfer tubes 5 in the areas S multiply partitioned along the axial direction of the heat transfer tubes 5. In this case, one second vibration suppression member 14B is arranged in the center of the areas S in the axial direction of the heat transfer tubes 5. In addition, when the second vibration suppression members 14B are inserted in the gaps, the gaps may be pushed out in advance using a predetermined jig, or may be pushed out by the second vibration suppression members 14B to be inserted.

Subsequently, when the second vibration suppression members 14B are inserted in the predetermined gaps between the heat transfer tube layers 5A, the second vibration suppression members 14B are inserted in the predetermined gaps between the neighboring heat transfer tube layers 5A in the off-plane direction. In the predetermined gaps between the neighboring heat transfer tube layers 5A in the off-plane direction, the second vibration suppression members 14B are inserted such that the areas S in which the second vibration suppression members 14B are inserted and the areas S in which the second vibration suppression members 14B are not inserted are alternately provided in the axial direction of the heat transfer tubes 5 in the areas S multiply partitioned along the axial direction of the heat transfer tubes 5. In this case, the second vibration suppression members 14B are inserted such that the areas S in which the second vibration suppression members 14B are inserted and the areas S in which the second vibration suppression members 14B are not inserted are alternately provided also in the off-plane direction of the heat transfer tube layers 5A.

Further, insertion of the second vibration suppression members 14B in the predetermined gaps between the heat transfer tube layers 5A and insertion of the second vibration suppression members 14B in the predetermined gaps between the heat transfer tube layers 5A neighboring to the predetermined gaps in the off-plane direction are repeated, so that a plurality of second vibration suppression members 14B is arranged in the zig-zag pattern in a plurality of areas S which forms the lattice pattern. The other end portions of a plurality of second vibration suppression members 14B arranged in the zig-zag pattern are aligned and arranged in a row in the off-plane direction of the heat transfer tube layers 5A along the arc of the semispherical shape of the heat transfer tube bundle 51, and are aligned and arranged in a plurality of rows at predetermined intervals in the in-plane direction of the heat transfer tube layers 5A.

When insertion of a plurality of second vibration suppression members 14B is finished, then the retaining members 16B are arranged between the retaining members 16A. To each retaining member 16B arranged between the retaining members 16A, the joint member 15B provided at the other end portion of each second vibration suppression member 14B is jointed (member jointing step: step S12 in FIG. 11). By this means, additionally providing the second vibration suppression members 14B is finished.

As described above, according to the configuration of the first embodiment, by newly and additionally providing the second vibration suppression members 14B to the existing first vibration suppression members 14A in the zig-zag pattern, a plurality of second vibration suppression members 14B can be arranged on both sides of each heat transfer tube 5 while pressing each heat transfer tube. In this case, a plurality of second vibration suppression members 14B is provided at different positions in the axial direction of the heat transfer tube 5, so that it is possible to alternately press each heat transfer tube 5 in the axial direction of each heat transfer tube. Consequently, the second vibration suppression members 14B can suitably suppress vibration of each heat transfer tube 5. Consequently, the steam generator 1 can reduce abrasion at contact portions between the heat transfer tubes 5 and the vibration suppression members 14.

Further, according to the configuration of the first embodiment, the second vibration suppression members 14B can be formed broader than the first vibration suppression members 14A. Consequently, when the first vibration suppression members 14A and the second vibration suppression members 14B are disposed in the gaps between the heat transfer tubes 5, the second vibration suppression members 14B can push out the gaps compared to the first vibration suppression members 14A, that is, press the heat transfer tubes 5 compared to the first vibration suppression members 14A. Consequently, the second vibration suppression members 14B which are newly and additionally provided can actively press the heat transfer tubes 5, and suitably suppress vibration of each heat transfer tube 5.

Further, according to the configuration of the first embodiment, the cross sections of the second vibration suppression members 14B can be formed in the rectangular shapes, and the contact portions with the heat transfer tubes 5 can be placed in line contact. Consequently, it is possible to expand the contact portions between the heat transfer tubes 5 and the second vibration suppression members 14B and distribute a load of pressing of the second vibration suppression members 14B against the heat transfer tubes 5.

### [Second Embodiment]

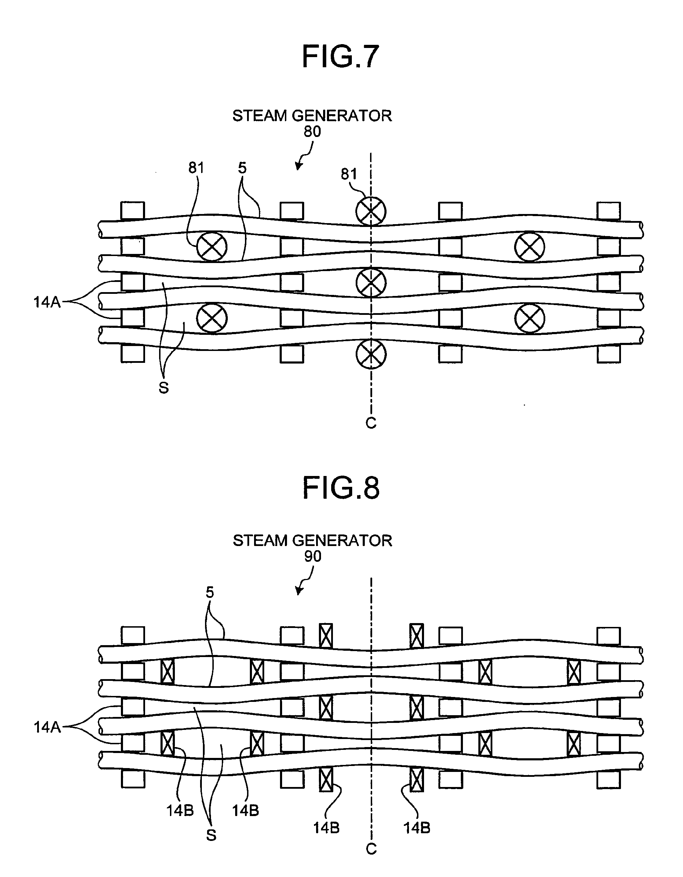

Next, a steam generator 80 according to a second embodiment, which is not claimed and is included for illustrative purposes, will be described with reference to FIG. 7. In addition, in the second embodiment, only different portions from the first embodiment will be described to avoid disclosure which overlaps the first embodiment. FIG. 7 is a plan view of part of a heat transfer tube bundle of a steam generator according to the second embodiment seen from the above. Although the cross sections of the second vibration suppression members 14B of a steam generator 1 according to the first embodiment are formed into rectangular shapes, cross sections of second vibration suppression members 81 of the steam generator 80 according to the second embodiment are formed into circular shapes.
Hereinafter, the steam generator 80 according to the second embodiment will be described with reference to FIG. 7.

In the steam generator 80 according to the second embodiment, the second vibration suppression member 81 is a bar body of a columnar shape the cross section of which is circular. That is, the cross sections of the second vibration suppression members 81 cut in the plane orthogonal to an insertion direction in which the second vibration suppression members are inserted in gaps are formed into circular shapes. Further, the diameters of the second vibration suppression members 81 are formed longer than the lengths of the first vibration suppression members 14A in the width direction (off-plane direction). Meanwhile, each heat transfer tube 5 is a round tube, so that the second vibration suppression members 81 and heat transfer tubes 5 are in point contact. Hence, when the second vibration suppression members 81 are inserted in the gaps between heat transfer tube layers 5A, the second vibration suppression members 81 are inserted while being in point contact with each heat transfer tube 5.

As described above, according to the configuration of the second embodiment, the cross sections of the second vibration suppression members 81 are circular, so that contact portions with the heat transfer tube 5 can be placed in point contact. Hence, the steam generator 80 can make the contact portions between the heat transfer tubes 5 and the second vibration suppression members 81 small, so that it is possible to reduce friction resistance and easily insert the second vibration suppression members 81.

### [Third Embodiment]

Next, a steam generator 90 according to a third embodiment, which is not claimed and is included for illustrative purposes, will be described with reference to FIG. 8. In addition, in the third embodiment, too, only different portions from the first embodiment will be described to avoid disclosure which overlaps the first embodiment. FIG. 8 is a plan view of part of a heat transfer tube bundle of a steam generator according to a third embodiment seen from the above. Although one second vibration suppression member 14B is arranged in each area S in a gap between heat transfer tube layers 5A in a steam generator 1 according to the first embodiment, a plurality of second vibration suppression members 14B is arranged in each area S in the steam generator 90 according to the third embodiment. Hereinafter, the steam generator 90 according to the second embodiment will be described with reference to FIG. 8.

In the steam generator 90 according to the third embodiment, the second vibration suppression members 14B are inserted in a zig-zag pattern in a plurality of areas S arranged in a lattice pattern partitioned by end portions of a plurality of first vibration suppression members 14A such that the areas S in which the second vibration suppression members 14B are inserted and the areas S in which the second vibration suppression members 14B are not inserted are alternately provided in the in-plane direction and the off-plane direction. In this case, the two second vibration suppression members 14B are inserted in each area S, and the two second vibration suppression members 14B are arranged and provided in the axial direction (in-plane direction) of heat transfer tubes 5 and are provided concentrating on an end portion side of two first vibration suppression members 14A on an outer side of the in-plane direction of the two second vibration suppression members 14B.

As described above, according to the configuration of the third embodiment, even when each area S partitioned by the end portions of the first vibration suppression members 14A is long in the in-plane direction, the two second vibration suppression members 14B can adequately press each heat transfer tube 5 in the off-plane direction on the both sides of each area S in the in-plane direction. Consequently, the second vibration suppression members 14B can suitably suppress vibration of each heat transfer tube 5. Consequently, the steam generator 90 can reduce abrasion at contact portions between the heat transfer tubes 5 and the vibration suppression members 14.

### [Fourth Embodiment]

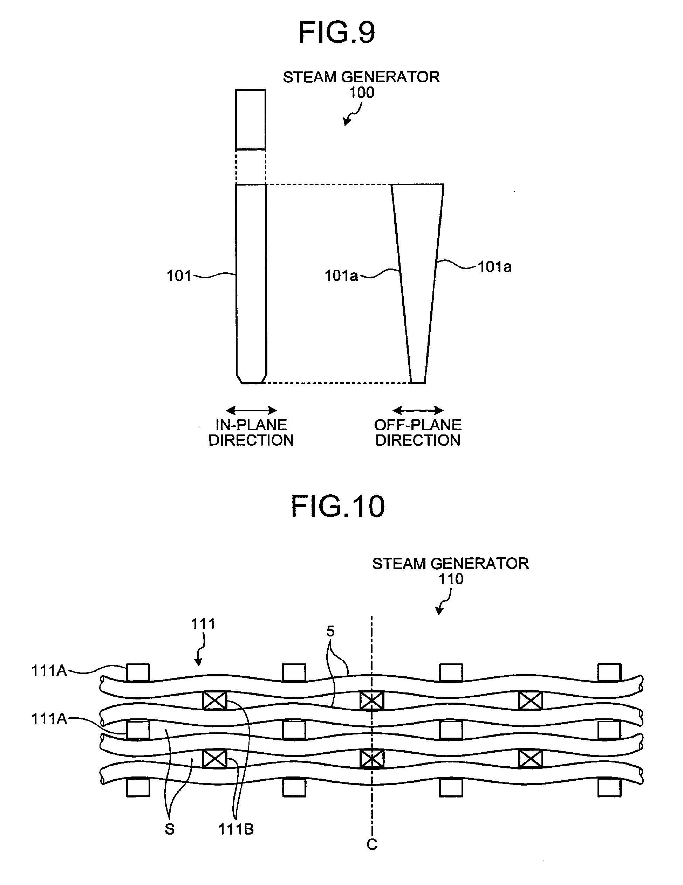

Next, a steam generator 100 according to a fourth embodiment, which is not claimed and is included for illustrative purposes, will be described with reference to FIG. 9. In addition, in the fourth embodiment, too, only different portions from the first embodiment will be described to avoid disclosure which overlaps the first embodiment. FIG. 9 is a trihedral figure of a second vibration suppression member disposed in a heat transfer tube bundle of a steam generator according to the fourth embodiment. Although second vibration suppression members 14B of rectangular shapes the cross sections of which are rectangular are arranged in a steam generator 1 according to a first embodiment, second vibration suppression members 101 of tapered shapes are arranged in a steam generator 100 according to the fourth embodiment. Next, the steam generator 100 according to the fourth embodiment will be described with reference to FIG. 9.

As illustrated in the steam generator 100 according to the fourth embodiment, the second vibration suppression members 101 are formed in linear shapes such that the lengths in the in-plane direction are the same lengths from other end side (rear end side) to one end side (front end side). Meanwhile, the second vibration suppression members 101 are formed into the tapered shapes which are tapered from the other end side to one end side in the width direction (off-plane direction). That is, both side surfaces of the second vibration suppression member 101 in the off-plane direction are tapered surfaces 101a, and the tapered surfaces 101a are surfaces which are inclined toward the inner side from the other end side to one end side. The length of the thinly formed one end portion of this second vibration suppression member 101 in the off-plane direction is shorter (thinner) than the length of a first vibration suppression member 14A in the off-plane direction. Meanwhile, the length of the thickly formed other end portion of this second vibration suppression member 101 in the off-plane direction is longer (thicker) than the length of the first vibration suppression member 14A in the off-plane direction.

As described above, according to the configuration of the fourth embodiment, the second vibration suppression member 101 can be formed into a tapered shape which is tapered from the other end side to one end side. Consequently, when the second vibration suppression members 101 are inserted in gaps between heat transfer tube layers 5A, the one end portions of the second vibration suppression members 101 are thin, so that it is possible to easily insert the one end portions of the second vibration suppression members 101 in the gaps between the heat transfer tube layers 5A. Further, by further inserting the second vibration suppression members 101, it is possible to position the other end portions of the second vibration suppression members 101 in the gaps between the heat transfer tube layers 5A and, consequently, suitably press the heat transfer tubes 5 by means of the other end portions of the second vibration suppression members 101. In addition, the second vibration suppression members 101 may be formed into the tapered shape which is tapered from the other end side to one end side in the in-plane direction (the direction orthogonal to the width direction).

### [Fifth Embodiment]

Next, a steam generator 110 according to a fifth embodiment, which is not claimed and is included for illustrative purposes, will be described with reference to FIG. 10. In addition, in the fifth embodiment, too, only different portions from the first embodiment will be described to avoid disclosure which overlaps the first embodiment. FIG. 10 is a plan view of part of a heat transfer tube bundle of a steam generator according to the fifth embodiment seen from the above. Although, with a steam generator 1 according to the first embodiment, second vibration suppression members 14B are arranged in the zig-zag pattern by newly and additionally providing the second vibration suppression members 14B in the existing steam generator 1, in a steam generator 110 according to the fifth embodiment, vibration suppression members 111 are disposed in a zig-zag pattern upon assembly of the steam generator 110. Next, the steam generator 110 according to the fifth embodiment will be described with reference to FIG. 10.

In the steam generator 110 according to the fifth embodiment, a plurality of vibration suppression members 111 is inserted in gaps between neighboring heat transfer tube layers 5A in an off-plane direction as illustrated in FIG. 10. With a plurality of vibration suppression members 111, a plurality of first vibration suppression members 111A is provided in one gap of two gaps formed on both sides of the predetermined heat transfer tube layer 5A in the off-plane direction, and a plurality of second vibration suppression members 111B is provided in the other gap.

In addition, although the second vibration suppression members 14B are formed broader than the first vibration suppression members 14A in the first embodiment, the second vibration suppression members 111B and the first vibration suppression members 111A have the same width in the fifth embodiment.

A plurality of first vibration suppression members 111A employs the same configuration as that of the first vibration suppression members 14A according to the first embodiment, three pairs of first vibration suppression members 14A are provided along a circumferential direction of the curvature radii of the heat transfer tube layers 5A.

A plurality of second vibration suppression members 111B employs the same configuration as that of the second vibration suppression members 14B according to the first embodiment, and three of the 11 second vibration suppression members 111B are provided to one pair first vibration suppression member 111A and two are provided between the three pairs of the first vibration suppression members 111A. In this case, although five of the 11 second vibration suppression members 14B are provided in one of two gaps formed on both sides of the predetermined heat transfer tube layers 5A in the off-plane direction and six are provided in the other gap in the first embodiment, the 11 second vibration suppression members 111B are provided in the other gap between the heat transfer tube layer 5A in the fifth embodiment.

Further, the gaps in which a plurality of first vibration suppression members 111A is provided and the gaps in which a plurality of second vibration suppression members 111B is provided are alternately provided in the off-plane direction of the heat transfer tube layers 5A. Hence, as illustrated in FIG. 10, a plurality of first vibration suppression members 111A and a plurality of second vibration suppression members 111B are provided on both sides sandwiching each heat transfer tube 5, and are alternately arranged at predetermined intervals along the axial direction of the heat transfer tubes 5. In other words, a plurality of vibration suppression members 111 provided on the both sides sandwiching each heat transfer tube 5 is provided at different positions in the axial direction of the heat transfer tubes 5. That is, a plurality of vibration suppression members 111 is arranged in the zig-zag pattern.

As described above, according to the configuration of the fifth embodiment, by arranging a plurality of vibration suppression members 111 in the zig-zag pattern upon assembly of the steam generator 110, a plurality of vibration suppression members 111 can be arranged on the both sides of each heat transfer tube 5 while pressing each heat transfer tube. In this case, a plurality of second vibration suppression members 111 is provided at different positions in the axial direction of the heat transfer tube 5, so that it is possible to alternately press each heat transfer tube 5 in the axial direction of each heat transfer tube. Consequently, a plurality of vibration suppression members 111 can suitably suppress vibration of each heat transfer tube 5. Consequently, the steam generator 110 can reduce abrasion at contact portions between the heat transfer tubes 5 and the vibration suppression members 111.

In addition, although a plurality of second vibration suppression members 14B, 81 and 101 or a plurality of vibration suppression members 111 is arranged in the zig-zag pattern in the first to fifth embodiments, the present disclosure is not limited to this configuration, at least one pair of vibration suppression members only needs to be provided on both sides in the radial direction sandwiching the heat transfer tube 5 and at different positions in the axial direction of the heat transfer tubes 5.

### [Sixth Embodiment]

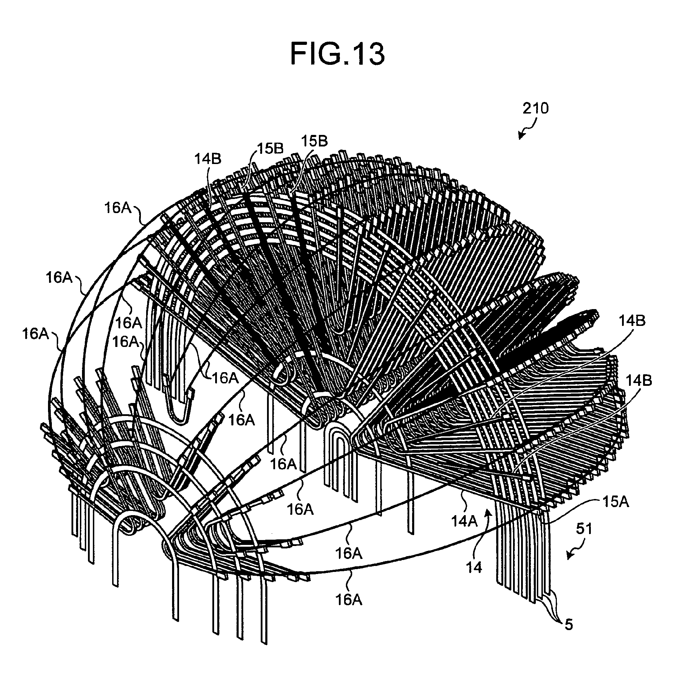

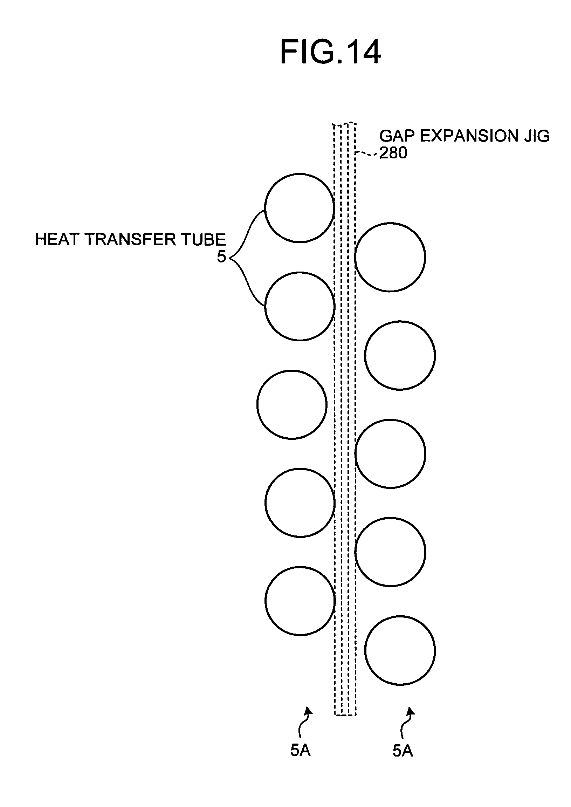

Next, a steam generator 210 according to a sixth embodiment will be described with reference to FIGS. 12 to 23. In addition, in the sixth embodiment, too, only different portions from the first embodiment will be described to avoid disclosure which overlaps the first embodiment. FIG. 12 is an A-A cross-sectional view of FIG. 2, and FIG. 13 is a perspective schematic view of the heat transfer tube bundle. FIG. 14 is an axial cross-sectional view of a heat transfer tube bundle in a center plane. In addition, FIG. 12 is an A-A cross-sectional view according to the sixth embodiment.

Axial cross sections of a plurality of heat transfer tubes 5 of a heat transfer tube bundle 51 in the center plane C are arranged as illustrated in FIG. 14. As illustrated in FIG. 14, in the center plane C, the stacked heat transfer tube layers 5A are arranged at different vertical positions in the in-plane direction. Hence, a plurality of heat transfer tubes 5 is arranged in the zig-zag pattern in the center plane C. Further, as illustrated in FIG. 14, a plurality of vibration suppression members 14 and a gap expansion jig 280 described below are inserted in gaps between neighboring heat transfer tube layers 5A.

Each vibration suppression member 14 is made of a metal material such as stainless steel similar to the first embodiment. Further, as described above, a plurality of vibration suppression members 14 has a plurality of first vibration suppression members 14A which has already been provided (which is existing) and a plurality of second vibration suppression members 14B which is additionally provided. In addition, FIG. 13 illustrates part of the second vibration suppression members 14B which are additionally provided, and an arrangement illustrated in FIG. 13 is not limited thereto.

In addition, the first vibration suppression members 14A illustrated in FIGS. 12 and 13 are the same as the first vibration suppression members 14A illustrated in FIGS. 3 and 4, and therefore will not be described.

As illustrated in FIG. 12, the second vibration suppression member 14B is a bar body of a cuboid shape (linear shape) which has a rectangular cross section. The second vibration suppression member 14B is arranged such that the longitudinal direction of the second vibration suppression member is the same direction as the radial direction of the curvature radius. That is, the second vibration suppression member 14B is arranged such that one end portion in this longitudinal direction is positioned on a center side (inner side) of the curvature radius of the heat transfer tube 5 in the radial direction, and the other end portion in the longitudinal direction is positioned outside the radial direction. Hence, the second vibration suppression members 14B are inserted in the gaps between heat transfer tubes 5 from one end portion side. Further, the other end portion of the second vibration suppression member 14B projects outward from the heat transfer tube 5 on the outermost side of the curvature radius in the radial direction.

A plurality of second vibration suppression members 14B is adequately provided in a plurality of gaps between the heat transfer tube layers 5A which forms a lattice pattern partitioned by end portions of a plurality of first vibration suppression members 14A. For example, three of a plurality of second vibration suppression members 14B may be provided to one pair of first vibration suppression members 14A, and two may be provided between three pairs of first vibration suppression members 14A. The three second vibration suppression members 14B which are provided to one pair of first vibration suppression members 14A are provided on an inner side of the small V shaped first vibration suppression member 14A. The rest of the two second vibration suppression members 14B are provided between the both end portions of the small V shaped first vibration suppression member 14A and the both end portions of the large V shaped first vibration suppression member 14A. Further, the two second vibration suppression members 14B provided between three pairs of the first vibration suppression members 14A are provided between a pair of first vibration suppression members 14A provided in the center and two pairs of first vibration suppression members 14A provided on both sides of one pair. In addition, the cross sections of the second vibration suppression members 14B are formed in rectangular shapes, and each heat transfer tube 5 is a round tube, so that the second vibration suppression members 14B and the heat transfer tubes 5 are placed in line contact.

When a plurality of second vibration suppression members 14B is disposed as described above, although not illustrated, the end portions of a plurality of second vibration suppression members 14B are aligned and arranged in a row in the off-plane direction of the heat transfer tube layers 5A along the arc of the semispherical shape of the heat transfer tube bundle 51 similar to the first vibration suppression members 14A. Further, a plurality of rows of the end portions of the second vibration suppression members 14B to be aligned is disposed at predetermined intervals along the arc of the semispherical shape of the heat transfer tube bundle 51 and along the in-plane direction of the heat transfer tube layers 5A.

The other end portion (the end portion on the outer side in the radial direction) of each second vibration suppression member 14B is provided with the joint member 15B. As illustrated in FIG. 12, this joint member 15B is jointed to a retaining member 16B described below. In addition, the joint member 15B is made of a metal material such as stainless steel.

In addition, the retaining member 16B is the same as that in the first embodiment, and will not be described.

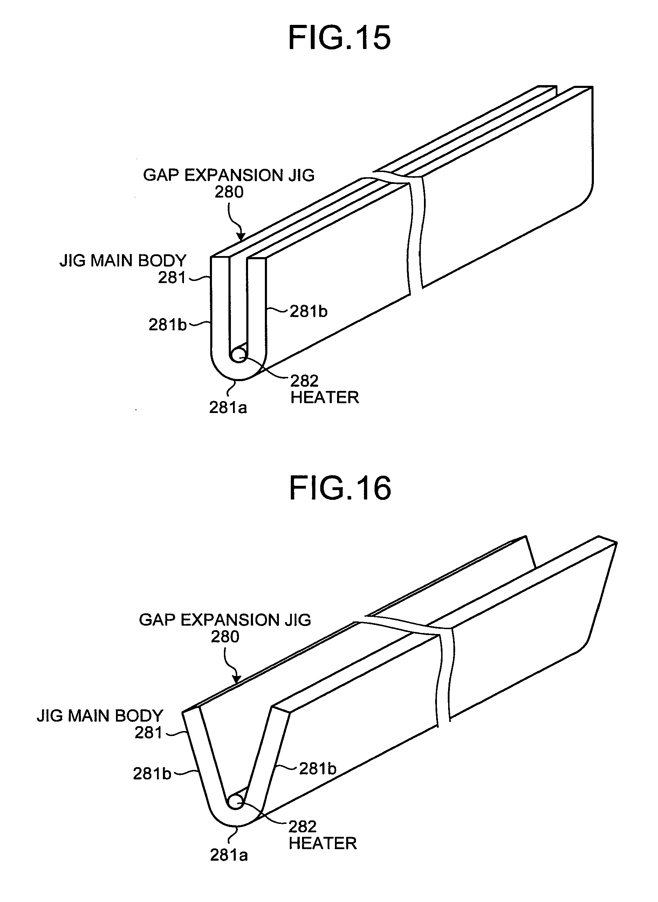

Next, the gap expansion jig 280 will be described with reference to FIGS. 15 and 16. FIG. 15 is a perspective view of a gap expansion jig before heating according to a sixth embodiment. FIG. 16 is a perspective view of the gap expansion jig before heating according to the sixth embodiment. In addition, a case will be described below where the gap expansion jig 280 is used when the second vibration suppression members 14B are additionally provided to the existing steam generator 210. However, the gap expansion jig 280 is not limited to this use. For example, the gap expansion jig may be used when the second vibration suppression members 14B are attached upon assembly of the steam generator 210. In addition, when the second vibration suppression members 14B are additionally provided to the existing steam generator 210, a plurality of heat transfer tubes 5 may sank in environment under water (underwater environment) to reduce an influence of neutrons. Hence, the gap expansion jig 280 is used in underwater environment in some cases.

As illustrated in FIG. 15, the gap expansion jig 280 has a jig main body 281 and a heater (temperature adjusting unit) 282. The jig main body 281 is made using a shape memory alloy. The jig main body 281 is formed in a shape by bending a flat shape memory alloy which extends in the longitudinal direction, in a center in the width direction orthogonal to the longitudinal direction, and the cross section seen from the longitudinal direction is a U shape. That is, the jig main body 281 has a bent portion 281a which extends in the longitudinal direction and which is bent in the center in the width direction, and a pair of end portions 281b which projects from both sides of the bent portion 281a in the width direction. In addition, the bent portion 281a is curved and formed. Further, the length of the jig main body 281 in the longitudinal direction is a length from the outermost heat transfer tube 5 of the heat transfer tube layer 5A to the innermost heat transfer tube 5.

While this jig main body 281 has a shape illustrated in FIG. 15 before heating, and the jig main body 281 has a shape illustrated in FIG. 16 after heating. That is, the jig main body 281 has a shape in which a pair of end portions (both end portions) 281b widens around the bent portion 281a after heating, and the cross section seen from the longitudinal direction is a V shape. At front ends of the end portions 281b of the jig main body 281 which is heated and expanded, the heat transfer tubes 5 contact. The shape of the jig main body 281 is stored to become smaller than the gaps between the heat transfer tube layers 5A before heating, and become larger than the gaps between the heat transfer tube layers 5A after heating.

The heater 282 heats the jig main body 281. The heater 282 is formed in a bar shape, and is attached along the bent portion 281a of the jig main body 281 which extends in the longitudinal direction, and in contact with an inner side of the bent portion 281a. Hence, the heater 282 uniformly heats the jig main body 281 along the longitudinal direction of the jig main body, and heats the jig main body from the center (bent portion 281a) to both end portions 281b in the width direction.

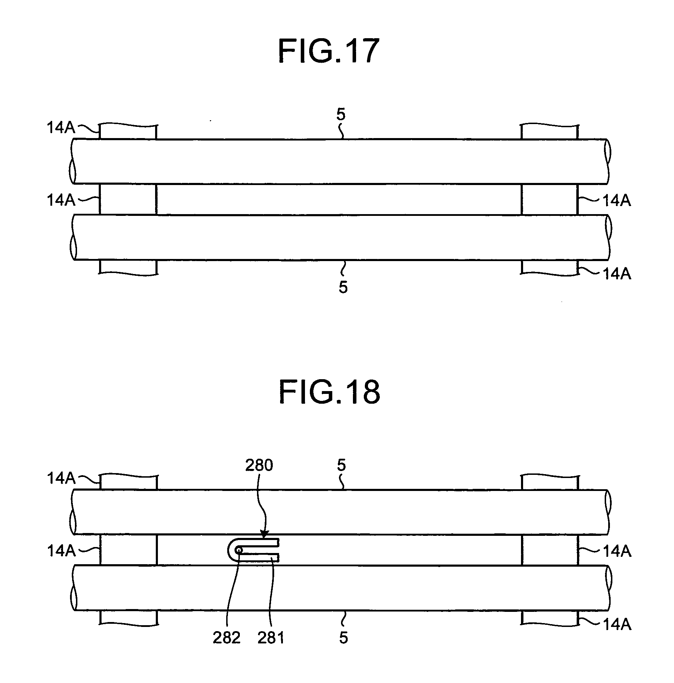

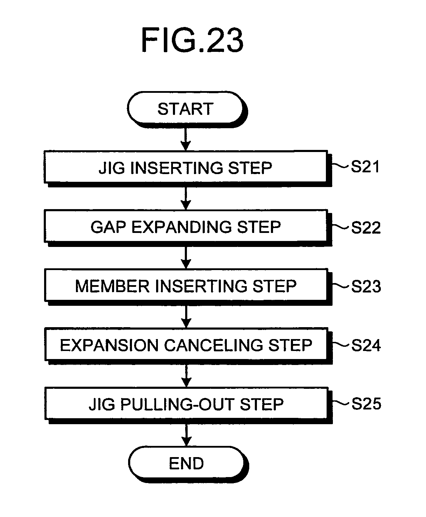

Next, a vibration suppression member 14 disposing method of newly and additionally providing second vibration suppression members 14B to the existing steam generator 210 will be described with reference to FIGS. 17 to 23. FIGS. 17 to 22 are explanatory views of examples related to the method of disposing the vibration suppression members using the gap expansion jig according to the sixth embodiment. FIG. 23 is a flowchart related to a method of additionally disposing vibration suppression members. As illustrated in FIG. 17, in the heat transfer tube bundle 51 in the existing steam generator 210 before disposition of the second vibration suppression members 14B, a plurality of heat transfer tube layers 5A (only the outermost heat transfer tubes 5 are illustrated in FIG. 17) is disposed with predetermined gaps, so that a plurality of outermost heat transfer tubes 5 is arranged in parallel. Further, a plurality of first vibration suppression members 14A is provided in the gaps between the neighboring heat transfer tube layers 5A, so that the end portions of a plurality of first vibration suppression members 14A are arranged in the lattice pattern. Hence, the sizes of the gaps between the neighboring heat transfer tube layers 5A are defined by the first vibration suppression members 14A provided in the gaps.

When the second vibration suppression members 14B are additionally provided in this existing steam generator 210, the jig main body 281 before heating is inserted in the predetermined gaps between the heat transfer tubes 5 as illustrated in FIG. 18 (jig inserting step: step S21 in FIG. 23). In this jig inserting step S21, the jig main body 281 is inserted in an insertion route illustrated in FIG. 14. In jig inserting step S21, the jig main body 281 is inserted such that a pair of end portions 281b of the jig main body 281 is positioned in the center between the neighboring first vibration suppression members 14A, and the bent portion 281a of the jig main body 281 is positioned on the first vibration suppression member 14A side.

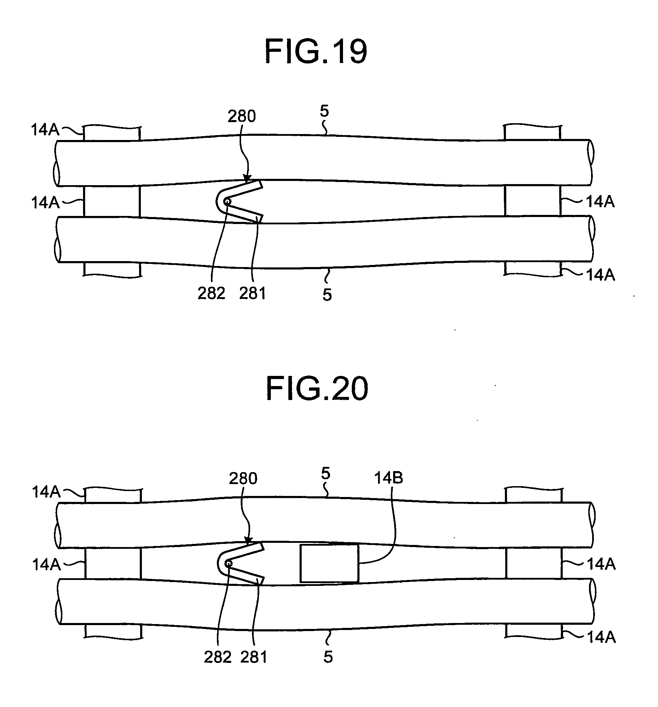

After the jig main body 281 is inserted, the heater 282 heats the jig main body 281 as illustrated in FIG. 19. When the jig main body 281 is heated, a pair of end portions (both end portions) 281b widens around this bent portion 281a and the front ends of a pair of end portions 281b contact the heat transfer tubes 5, and thereby the jig main body 281 expands the gaps between the heat transfer tubes 5 (heat transfer tube layers 5A) (gap expanding step: step S22 in FIG. 23). When the gaps between the heat transfer tubes 5 are expanded, the second vibration suppression members 14B are inserted in a state in which the gaps are expanded as illustrated in FIG. 20 (member inserting step: step S23 in FIG. 23). In addition, the second vibration suppression members 14B are formed to have the same width as the gaps between the heat transfer tubes 5 or become slightly broader than the gaps between the heat transfer tubes 5.

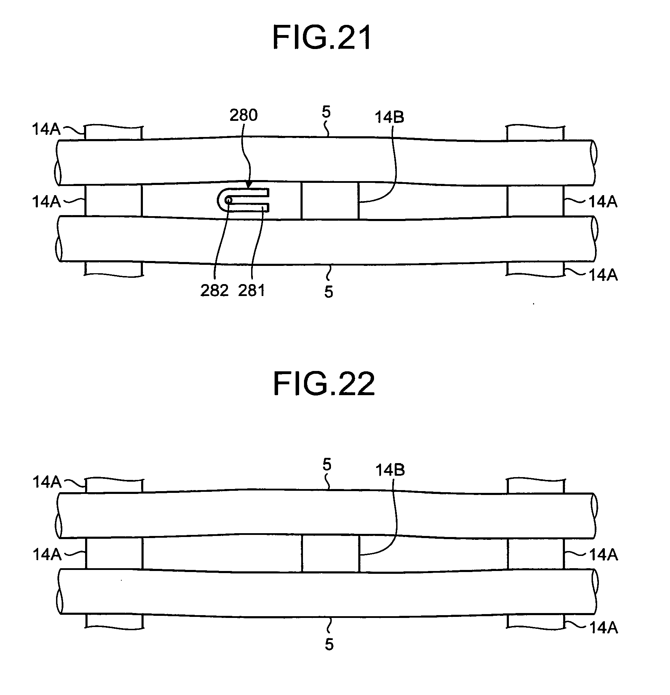

When the second vibration suppression members 14B are inserted, the heater 282 stops heating the jig main body 281. Hence, the jig main body 281 is naturally cooled. When the jig main body 281 is cooled, as illustrated in FIG. 21, a pair of end portions 281b narrows around the bent portion 281a, and the jig main body 281 cancels expansion of the gaps between the heat transfer tubes 5 (expansion canceling step: step S24 in FIG. 23). When the jig main body 281 cancels expansion of the gaps, the inserted second vibration suppression members 14B contact the heat transfer tubes 5 by being sandwiched by the heat transfer tubes 5. Further, as illustrated in FIG. 22, the jig main body 281 with a pair of narrowed end portions 281b is smaller than the gaps between the heat transfer tubes 5, and then the jig main body 281 is pulled out from the gaps between the heat transfer tubes 5 in this state (jig pulling-out step: step S25 in FIG. 23). By this means, additionally providing the second vibration suppression members 14B is finished. By repeating these steps, a plurality of second vibration suppression members 14B is additionally provided.

As described above, according to the configuration of the sixth embodiment, in addition to the existing first vibration suppression members 14A, the second vibration suppression members 14B can be newly arranged using the gap expansion jig 280. In this case, when the heater 282 heats the jig main body 281, the gap expansion jig 280 can deform the jig main body 281 to expand the gaps between the heat transfer tubes 5. In the state in which the gaps between the heat transfer tubes 5 are expanded, it is possible to insert the second vibration suppression members 14B in the gaps between the heat transfer tubes 5, and suitably insert the second vibration suppression members 14B. Consequently, the inserted second vibration suppression members 14B can contact each heat transfer tube 5, and can suitably suppress vibration of each heat transfer tube 5. Consequently, the steam generator 210 can reduce abrasion at contact portions between the heat transfer tubes 5 and the vibration suppression members 14.

Further, according to the configuration of the sixth embodiment, it is possible to make the jig main body 281 smaller than the gaps between the heat transfer tubes 5 before heating, and larger than the gaps between the heat transfer tubes 5 after heating. According to this configuration, it is possible to easily insert the jig main body 281 before heating, in the gaps between the heat transfer tubes 5. Further, by heating the jig main body 281, it is possible to reliably expand the gaps between the heat transfer tubes 5.

Furthermore, according to the configuration of the sixth embodiment, by providing the heater 282 inside the bent portion 281a in the center of the width direction, it is possible to heat the jig main body 281 from the center of the width direction to the end portions. Consequently, it is possible to make a temperature distribution of the heated jig main body 281 uniform and suitably deform the jig main body 281.

In addition, although the jig main body 281 is made of a shape memory alloy in the sixth embodiment, the jig main body is not limited to this configuration. For example, the bent portion 281a of the jig main body 281 may be made of a shape memory alloy, and portions other than the bent portion 281a may be made of another material.

Further, although the cross section of the jig main body 281 is formed into a U shape in the sixth embodiment, the jig main body is not limited to this configuration as long as the jig main body has a shape which can expand the gaps between the heat transfer tubes 5, and, for example, the cross section of the jig main body 281 may be formed in a C shape.

Furthermore, although the jig main body 281 is heated using the heater 282 in the sixth embodiment, a temperature adjusting mechanism which can perform heating and cooling may be provided instead of the heater 282. In this case, it is possible to actively cool the jig main body 281 and quickly cool the jig main body 281 compared to natural cooling. Consequently, it is possible to further narrow the jig main body 281 and reduce a time of the expansion canceling step of canceling expansion of the gaps between the heat transfer tubes 5.

Further, although the bent portion 281a of the jig main body 281 is bent and formed in the sixth embodiment, the bent portion is not limited to this configuration, and may be bent and formed.

### [Seventh Embodiment]

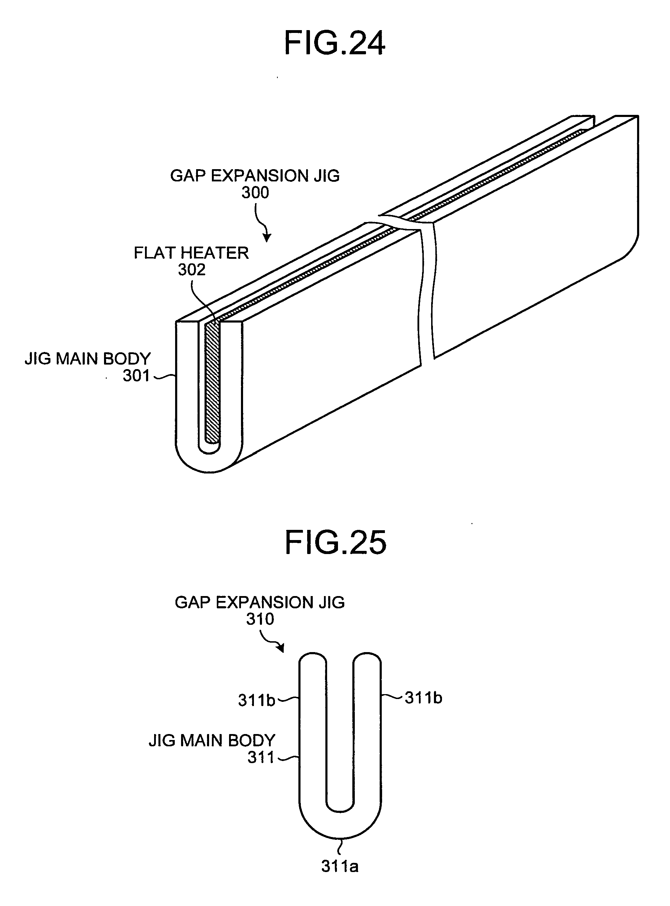

Next, a gap expansion jig 300 according to the seventh embodiment will be described with reference to FIG. 24. In addition, in the seventh embodiment, only different portions from the sixth embodiment will be described to avoid disclosure which overlaps the sixth embodiment. FIG. 24 is a perspective view of a gap expansion jig according to the seventh embodiment. Although a gap expansion jig 280 according to the sixth embodiment has a bar-shaped heater 282 inside the bent portion 281a to heat the jig main body 281, the gap expansion jig 300 according to the seventh embodiment has a flat heater 302 of a thin flat shape in an entire inner side of a jig main body 301 to heat the jig main body 301. Next, the gap expansion jig 300 according to the seventh embodiment will be described with reference to FIG. 24.

As illustrated in FIG. 24, the gap expansion jig 300 according to the seventh embodiment has the jig main body 301 and a flat heater (temperature adjusting unit) 302. In addition, the jig main body 301 employs the same configuration as that in the sixth embodiment, and therefore will not be described. The flat heater 302 heats the jig main body 301. The flat heater 302 is formed in a flexible thin flat shape, and is attached in contact with the entire inner side of the bent jig main body 301. Hence, the flat heater 302 uniformly heats the inner side of the jig main body 301 over the longitudinal direction of the jig main body and the width direction.

As described above, according to the configuration of the seventh embodiment, the entire inner side of the jig main body 301 is uniformly heated by the flat heater 302 to provide a uniform thermal distribution, so that it is possible to heat the jig main body 301 with little heat quantity and suitably deform the jig main body 301.

### [Eighth Embodiment]

Next, a gap expansion jig 310 according to an eighth embodiment will be described with reference to FIG. 25. In addition, in the eighth embodiment, too, only different portions from the sixth embodiment will be described to avoid disclosure which overlaps the sixth embodiment. FIG. 25 is a cross-sectional view of a jig main body of a gap expansion jig according to the eighth embodiment. The gap expansion jig 310 according to the eighth embodiment has curved surfaces of front ends of a pair of end portions 281b of a jig main body 281 according to the sixth embodiment. Next, the gap expansion jig 310 according to the eighth embodiment will be described with reference to FIG. 25.

As illustrated in FIG. 25, similar to the sixth embodiment, a jig main body 311 of the gap expansion jig 310 according to the eighth embodiment has a U-shaped cross section seen from the longitudinal direction, and has a bent portion 311a and a pair of end portions 311b. A front end of each end portion 311b which contacts a heat transfer tube 5 in a projection direction forms a curved surface. Hence, the cross section of the front end of each end portion 311b seen from the longitudinal direction is formed in a semispherical shape which is convex toward a projection side.

As described above, according to the configuration of the eighth embodiment, when the jig main body 311 is heated and a pair of end portions 311b widens in the width direction, and the front end of each end portion 311b of the jig main body 311 contacts the heat transfer tubes 5, it is possible to expand the gaps between the heat transfer tubes 5 without damaging the heat transfer tubes 5. Further, for example, a buffer is not used, so that, even when the gaps between the heat transfer tubes 5 are narrow, it is possible to suitably insert the jig main body 311. In addition, at least portions contacting the heat transfer tubes 5 only need to be curved surfaces.

### [Ninth Embodiment]

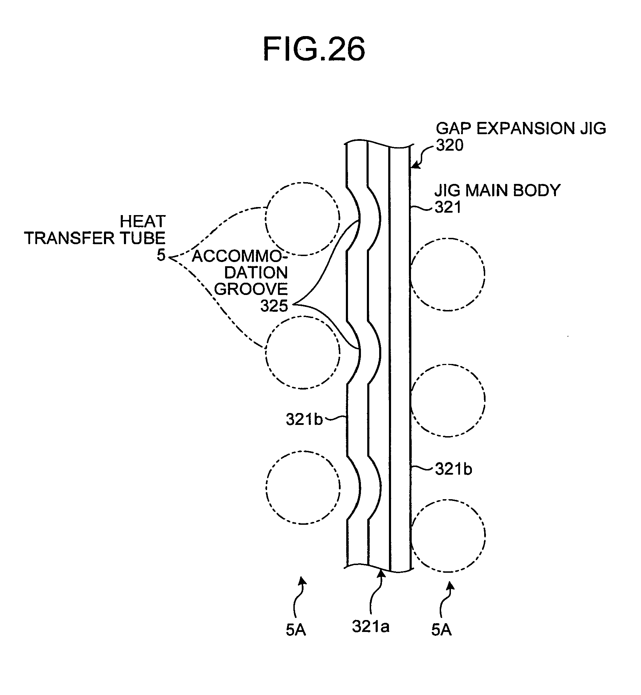

Next, a gap expansion jig 320 according to the ninth embodiment will be described with reference to FIG. 26. In addition, in the ninth embodiment, too, only different portions from the sixth embodiment will be described to avoid disclosure which overlaps the sixth embodiment. FIG. 26 is a plan view of a gap expansion jig according to the ninth embodiment. The gap expansion jig 320 according to the ninth embodiment has accommodation grooves 325 in one end portion 281b of a jig main body 281 according to the sixth embodiment. Next, the gap expansion jig 320 according to the ninth embodiment will be described with reference to FIG. 26.

Similar to the sixth embodiment, a jig main body 321 of the gap expansion jig 320 according to the ninth embodiment has a U-shaped cross section seen from the longitudinal direction, and has a bent portion 321a and a pair of end portions 321b. As illustrated in FIG. 26, a plurality of accommodation grooves 325 is formed on an outer side surface of one end portion 321b of a pair of end portions 321b, and the outer side surface of the other end portion 321b is flat.

A plurality of accommodation grooves 325 is provided at predetermined intervals along the longitudinal direction of the jig main body 321. More specifically, a plurality of accommodation grooves 325 is provided in association with a plurality of heat transfer tubes 5 aligned in the radial direction of the curvature radii of the heat transfer tube layers 5A. Further, each accommodation groove 325 is formed to extend in a direction orthogonal to the longitudinal direction of the jig main body 321, and is formed in the same direction as the axial direction of the heat transfer tubes 5 which each accommodation groove contacts upon heating (upon expansion). Each accommodation groove 325 is formed dented in the surface of the jig main body 321, and forms a curved surface in the cross section orthogonal to the direction in which each accommodation groove extends. In addition, each accommodation groove 325 is preferably formed as a greater curved surface than the outer diameter of the heat transfer tube 5.

In jig inserting step S21, the jig main body 321 formed in this way is inserted in the gaps between the heat transfer tubes 5 while the flat end portion 321b on the other side on which the accommodation grooves 325 are not formed are pressed against the heat transfer tubes 5 and the other side end portions 321b are used as a guide.

As described above, according to the configuration of the ninth embodiment, when the both end portions 321b of the jig main body 321 in the width direction are widened to contact the heat transfer tubes 5 and expand the gaps between the heat transfer tubes 5, it is possible to accommodate the heat transfer tubes 5 in the accommodation grooves 325. Consequently, it is possible to position the jig main body 321 with respect to the heat transfer tubes 5 and stably expand the gaps between the heat transfer tubes 5.

Further, according to the configuration of the ninth embodiment, by forming the accommodation grooves 325 at one end portion 321b of the jig main body 321 in the width direction and flatly forming the other end portion 321b of the jig main body 321 in the width direction, it is possible to insert the other end portion 321b of the jig main body 321 as a guide upon insertion to the gaps between the heat transfer tubes 5. Consequently, even when a plurality of accommodation grooves 325 is formed, it is possible to suppress resistance upon insertion of the jig main body 321.

### [Tenth Embodiment]

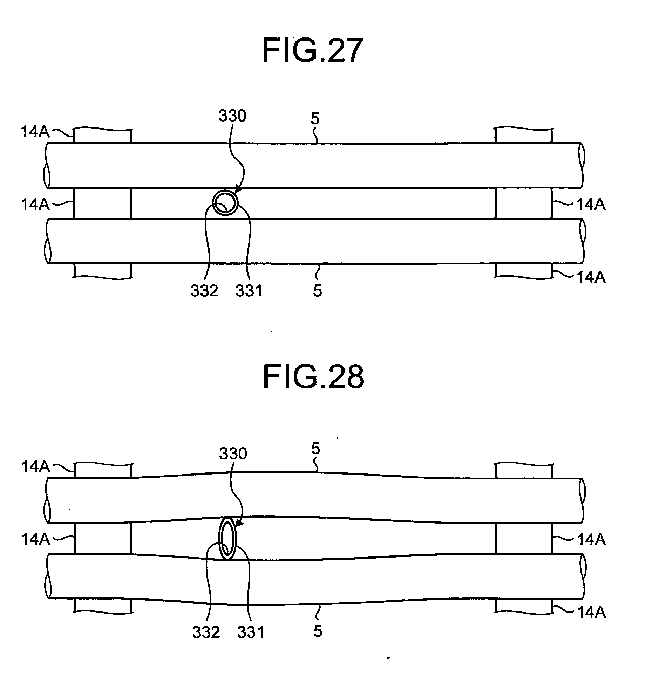

Next, a gap expansion jig 330 according to the tenth embodiment will be described with reference to FIGS. 27 and 28. In addition, in the tenth embodiment, too, only different portions from the sixth embodiment will be described to avoid disclosure which overlaps the sixth embodiment. FIG. 27 is a cross-sectional view of a jig main body before deformation of a gap expansion jig according to the tenth embodiment. FIG. 28 is a cross-sectional view of the jig main body before deformation of the gap expansion jig according to the tenth embodiment. Although a cross section of a jig main body 281 of a gap expansion jig 280 according to the sixth embodiment is formed into a U shape, a cross section of a jig main body 331 of the gap expansion jig 330 according to the tenth embodiment is formed in a circular shape. Next, the gap expansion jig 330 according to the tenth embodiment will be described with reference to FIGS. 27 and 28.

As illustrated in FIG. 27, the gap expansion jig 330 according to the tenth embodiment has the jig main body 331 and a temperature adjusting unit 332. Meanwhile, the temperature adjusting unit 332 is, for example, a flat heater 332. The jig main body 331 is formed in a cylindrical shape using a shape memory alloy, and is formed extending in the longitudinal direction as an axial direction. Hence, a cross section of the jig main body 331 cut in the plane orthogonal to the longitudinal direction is circular. The diameter of this jig main body 331 is smaller than the gaps between heat transfer tube layers 5A.

While this jig main body 331 has a shape illustrated in FIG. 27 before heating, the jig main body has a shape illustrated in FIG. 28 after heating. That is, the cross section of the jig main body 331 cut in the plane orthogonal to the longitudinal direction after heating is elliptic. In this case, a long axis of the jig main body 331 the cross section which is elliptic is a direction in which the heat transfer tubes 5 face each other, and a short axis of the jig main body 331 is a direction orthogonal to the direction in which the heat transfer tubes 5 face each other. Hence, a portion of the long axis of the heated jig main body 331 contacts the heat transfer tubes 5, and expands the gaps between the heat transfer tubes 5. Consequently, the shape of the jig main body 331 is stored to become smaller than the gaps between the heat transfer tube layers 5A before heating, and become larger than the gaps between the heat transfer tube layers 5A after heating.

The flat heater 332 heats the jig main body 331. The flat heater 332 is formed in a flexible thin flat shape, and is attached in contact with the entire inner periphery surface of the cylindrical bent jig main body 331. Hence, the flat heater 332 uniformly heats the inner periphery surface of the jig main body 331. In addition, instead of the flat heater 332, a bar-shaped heater in the first embodiment may be applied.

As described above, according to the configuration of the tenth embodiment, the flat heater 332 uniformly heats the inner periphery surface of the jig main body 331, so that the circular cross section can be deformed in the elliptic cross section and the gaps between the heat transfer tubes 5 can be suitably expanded.

### [Eleventh Embodiment]

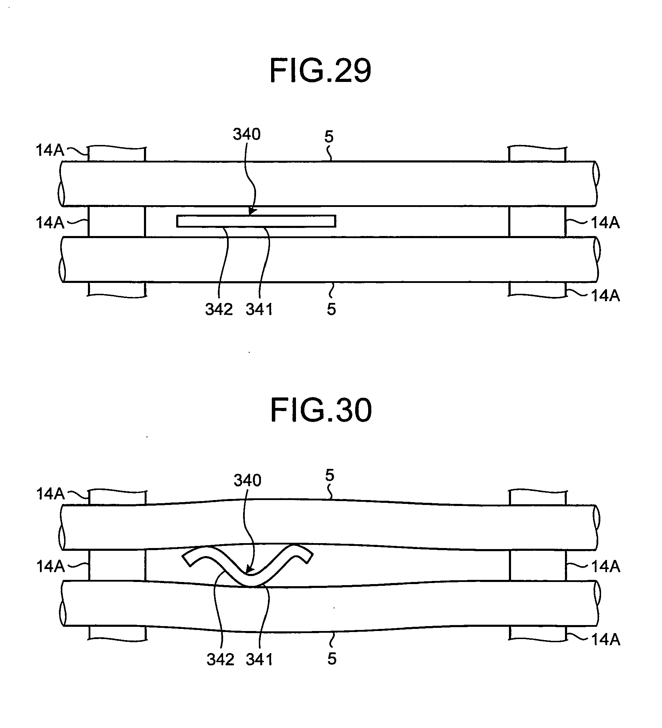

Next, a gap expansion jig 340 according to the eleventh embodiment will be described with reference to FIGS. 29 and 30. In addition, in the eleventh embodiment, too, only different portions from the sixth embodiment will be described to avoid disclosure which overlaps the sixth embodiment. FIG. 29 is a cross-sectional view of a jig main body before deformation of a gap expansion jig according to the eleventh embodiment. FIG. 30 is a cross-sectional view of the jig main body before deformation of the gap expansion jig according to the eleventh embodiment. Although a cross section of a jig main body 281 of a gap expansion jig 280 according to the sixth embodiment is formed into a U shape, a jig main body 341 of the gap expansion jig 340 according to the eleventh embodiment is formed into a flat shape. Next, the gap expansion jig 340 according to the eleventh embodiment will be described with reference to FIGS. 29 and 30.

As illustrated in FIG. 29, the gap expansion jig 340 according to the eleventh embodiment has the jig main body 341 and a temperature adjusting unit 342. Meanwhile, the temperature adjusting unit 342 is, for example, a flat heater 342. The jig main body 341 is a shape memory alloy of a flat shape which extends in the longitudinal direction. Hence, a cross section of the jig main body 341 cut in the plane orthogonal to the longitudinal direction is rectangular. The diameter of this jig main body 341 is smaller than the gaps between heat transfer tube layers 5A.

While this jig main body 341 has a shape illustrated in FIG. 29 before heating, and the jig main body has a shape illustrated in FIG. 30 after heating. That is, the cross section of the jig main body 341 cut in the plane orthogonal to the longitudinal direction after heating is wavy. More specifically, the jig main body 341 is formed in a wavy shape of a lateral wave traveling in a direction in which the heat transfer tubes 5 face each other, and the top of the jig main body 341 the cross section of which is wavy contacts the heat transfer tubes 5 and expands the gaps between the heat transfer tubes 5. Consequently, the shape of the jig main body 341 is stored to become smaller than the gaps between the heat transfer tube layers 5A before heating, and become larger than the gaps between the heat transfer tube layers 5A after heating.

The flat heater 342 heats the jig main body 341. The flat heater 342 is formed in a flexible flat shape, and is attached in contact with a portion other than the top of the jig main body 341 the cross section of which is wavy, that is, a portion other than the portion which contacts the heat transfer tubes 5. In addition, instead of the flat heater 342, a bar shaped heater 282 in the sixth embodiment may be applied.

As described above, according to the configuration of the eleventh embodiment, the flat heater 342 heats the jig main body 341, so that the jig main body 341 can be deformed from the flat shape to the wavy shape and the gaps between the heat transfer tubes 5 can be suitably expanded.

### [Twelfth Embodiment]

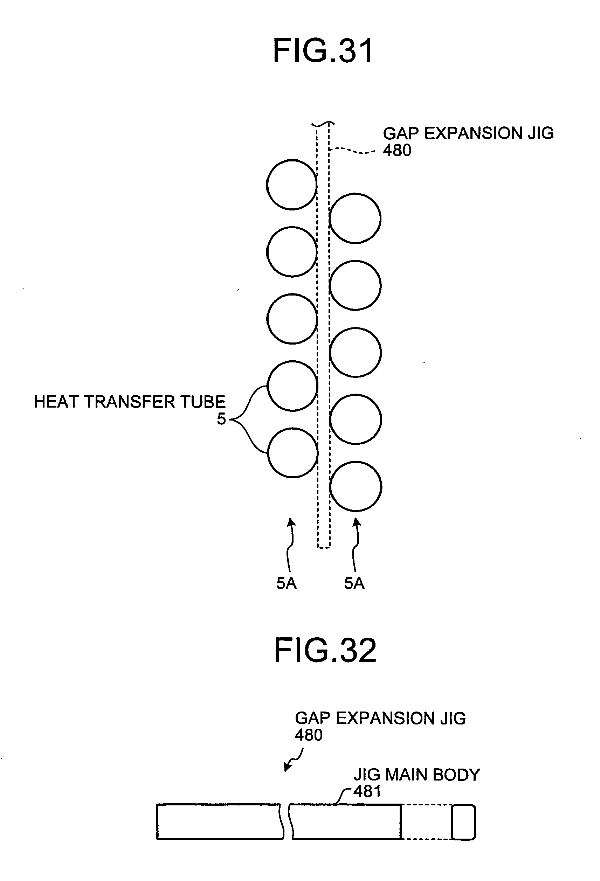

Next, a gap expansion jig 480 according to a twelfth embodiment, which is not claimed and is included for illustrative purposes, will be described with reference to FIGS. 31 to 39. In addition, in the twelfth embodiment, only different portions from the sixth embodiment will be described to avoid disclosure which overlaps the sixth embodiment. FIG. 31 is an axial cross-sectional view of a heat transfer tube bundle in a center plane.

Axial cross sections of a plurality of heat transfer tubes 5 of a heat transfer tube bundle 51 in a center plane C are arranged as illustrated in FIG. 31. As illustrated in FIG. 31, in the center plane C, the stacked heat transfer tube layers 5A are arranged at different vertical positions in the in-plane direction. Hence, a plurality of heat transfer tubes 5 is arranged in the zig-zag pattern in the center plane C. Further, as illustrated in FIG. 31, a plurality of vibration suppression members 14 and a gap expansion jig 480 described below are inserted in gaps between neighboring heat transfer tube layer 5A.

Next, the gap expansion jig 480 will be described with reference to FIG. 32. FIG. 32 is a schematic configuration diagram schematically illustrating a gap expansion jig according to the twelfth embodiment. In addition, a case will be described below where the gap expansion jig 480 is used when second vibration suppression members 14B are additionally provided to the same existing steam generator 210 as that in the sixth embodiment. However, the gap expansion jig 480 is not limited to this use. For example, the gap expansion jig may be used when the second vibration suppression members 14B are attached upon assembly of the steam generator 210. In addition, when the second vibration suppression members 14B are additionally provided to the existing steam generator 210, a plurality of heat transfer tubes 5 may sank in environment under water (underwater environment) to reduce an influence of neutrons. Hence, the gap expansion jig 480 is used in underwater environment in some cases.

As illustrated in FIG. 32, the gap expansion jig 480 is formed with a jig main body 481. The jig main body 81 is formed in a bar shape which extends in the longitudinal direction, and is made of, for example, metal such as steel or reinforced plastic. The cross section of the jig main body 481 orthogonal to the longitudinal direction is formed in a rectangular shape. In this case, short sides (short portions) of a shorter outer dimension of the rectangular shape is shorter than the lengths of the gaps between the neighboring heat transfer tube layers 5A (heat transfer tubes 5) in the direction in which the heat transfer tubes 5 face each other. Meanwhile, long sides (long portions) of a longer outer dimension of the rectangular shape are longer than the lengths of the gaps between the neighboring heat transfer tube layers 5A (heat transfer tubes 5) in the direction in which the heat transfer tubes 5 face each other. Further, angular portions of the rectangular shape of the jig main body 481 are formed in curved surfaces which are convex outward. Further, this jig main body 481 is rotatable in this longitudinal direction as the axial direction. By rotating this jig main body 481, the short sides and the long sides of the jig main body 481 are transitioned in the direction in which the heat transfer tubes 5 face each other.

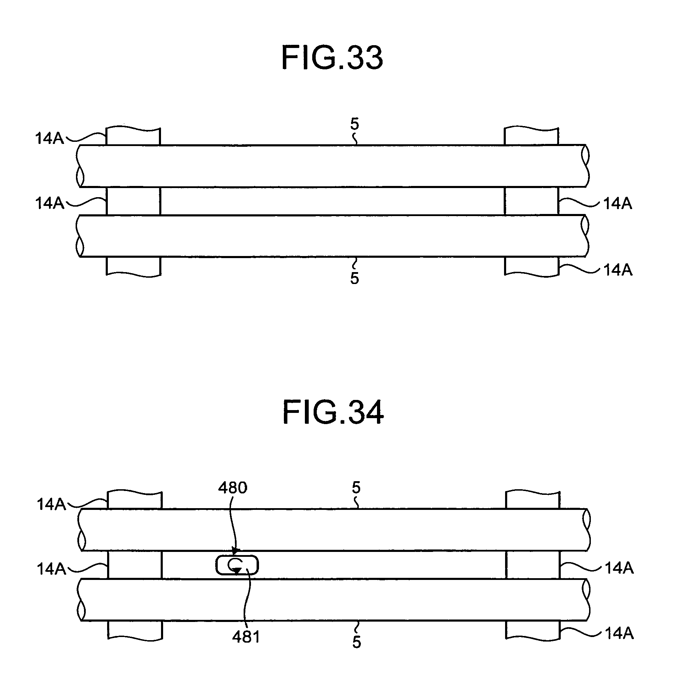

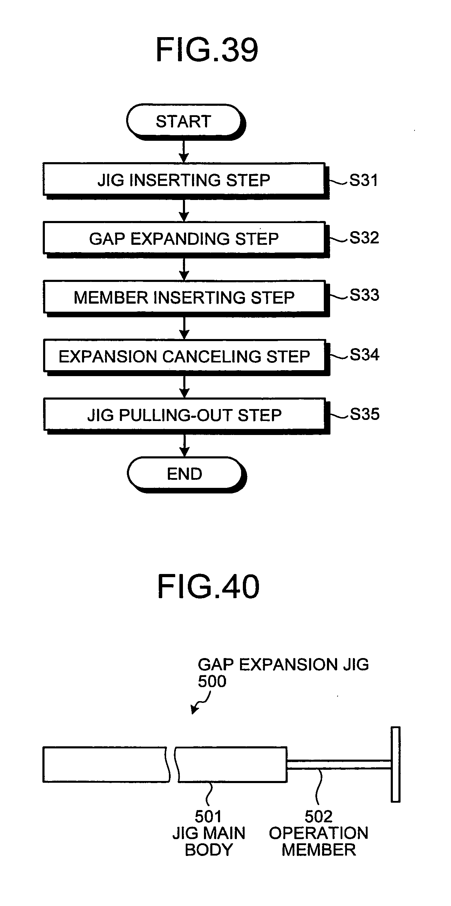

Next, a vibration suppression member 14 disposing method of newly and additionally providing a plurality of second vibration suppression members 14B to the existing steam generator 210 will be described with reference to FIGS. 33 to 39. FIGS. 33 to 38 are explanatory views of examples related to the method of disposing the vibration suppression members using the gap expansion jig according to the twelfth embodiment. FIG. 39 is a flowchart related to a method of additionally disposing the vibration suppression members. As illustrated in FIG. 33, in the heat transfer tube bundle 51 in the existing steam generator 210 before disposition of the second vibration suppression members 14B, a plurality of heat transfer tube layers 5A (only the outermost heat transfer tubes 5 are illustrated in FIG. 33) is disposed with predetermined gaps, so that a plurality of outermost heat transfer tubes 5 is arranged in parallel. Further, a plurality of first vibration suppression members 14A is provided in the gaps between the neighboring heat transfer tube layers 5A, so that the end portions of a plurality of first vibration suppression members 14A are arranged in the lattice pattern. Hence, the sizes of the gaps between the neighboring heat transfer tube layers 5A are defined by the first vibration suppression members 14A provided in the gaps.

When the second vibration suppression members 14B are additionally provided in this existing steam generator 210, the jig main body 481 is inserted in the predetermined gaps between the heat transfer tubes 5 as illustrated in FIG. 34 such that the short sides of the jig main body 481 are in the direction in which the heat transfer tubes 5 face each other (jig inserting step: step S31 in FIG. 39). In this jig inserting step S31, the jig main body 481 is inserted in an insertion route illustrated in FIG. 31.

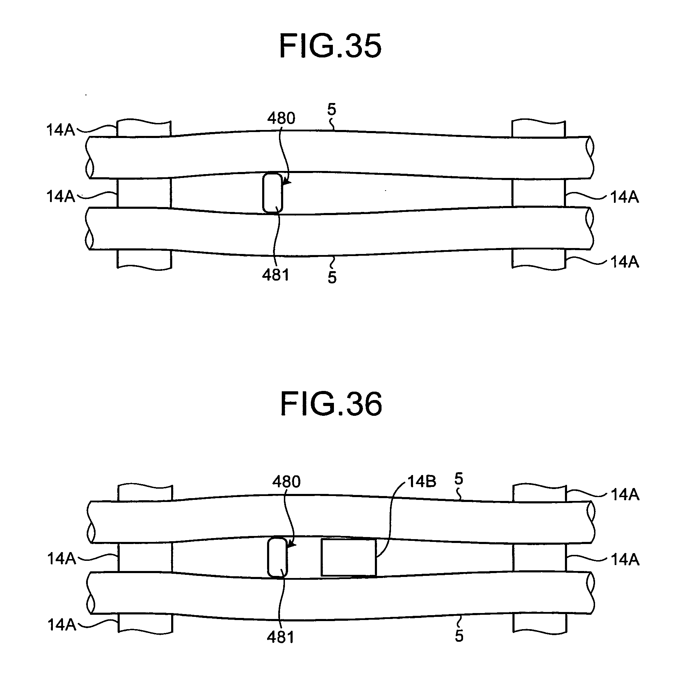

After the jig main body 481 is inserted, the jig main body 481 is rotated as illustrated in FIG. 35. When the jig main body 481 is rotated, in the direction in which the heat transfer tubes 5 face each other, the length of the jig main body 481 transitions from the lengths in the short sides of the rectangular shape transitions to the length in a diagonal line of the rectangular shape and then to the lengths in the long sides of the rectangular shape. Hence, the gaps between the heat transfer tubes 5 are expanded and become maximum in the diagonal line of the rectangular shape of the jig main body 481, and then are slightly narrowed in the long sides of the rectangular shape of the jig main body 481. In this case, the long sides of the rectangular shape of the jig main body 481 are longer than the gaps between the heat transfer tubes 5, so that the jig main body 481 expands the gaps between the heat transfer tubes 5 (heat transfer tube layers 5A) (gap expanding step: step S32 in FIG. 39). When the gaps between the heat transfer tubes 5 are expanded, the second vibration suppression members 14B are inserted in a state in which the gaps between the heat transfer tubes 5 are expanded as illustrated in FIG. 36 (member inserting step: step S33 in FIG. 39). In this case, the second vibration suppression members 14B are formed to the same degree as or slightly broader than the gaps between the heat transfer tubes 5 before expansion and are formed shorter than the lengths of the long sides of the jig main body 481, and, consequently inserted in the gaps between the heat transfer tubes 5 suitably. In other words, the lengths of the long sides of the jig main body 481 are longer than the second vibration suppression members 14B in the direction in which the heat transfer tubes face each other, so that the second vibration suppression members 14B are suitably inserted in the gaps between the heat transfer tubes 5.

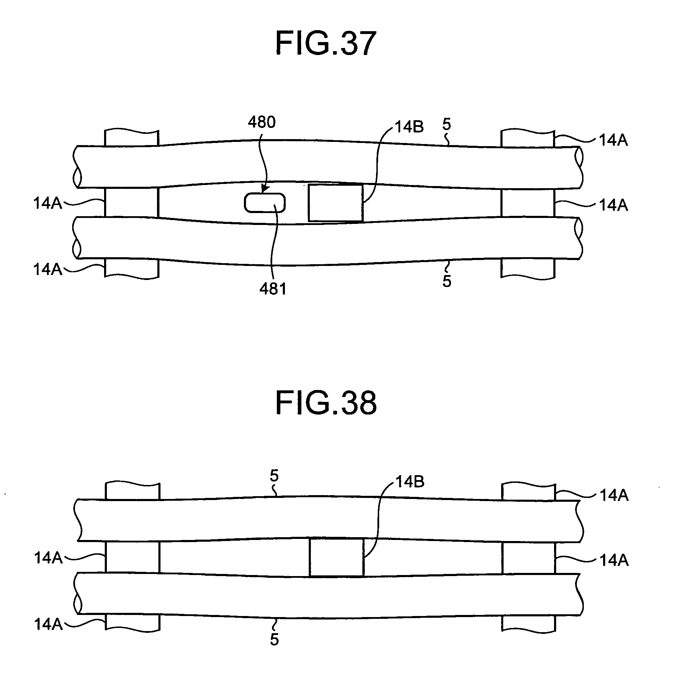

When the second vibration suppression members 14B are inserted, the jig main body 481 is rotated again. As illustrated in FIG. 37, when the jig main body 481 is rotated, in the direction in which the heat transfer tubes 5 face each other, the length of the jig main body 481 transitions from the lengths in the long sides of the rectangular shape to the length in a diagonal line of the rectangular shape and then to the length in the short sides of the rectangular shape. Hence, the gaps between the heat transfer tubes 5 are expanded and become maximum in the diagonal line of the rectangular shape of the jig main body 481, and then are returned to the gaps before expansion in the long sides of the rectangular shape of the jig main body 481. That is, the short sides of the rectangular shape of the jig main body 481 are shorter than the gaps between the heat transfer tubes 5, so that the jig main body 481 cancels expansion of the gaps between the heat transfer tubes 5 (expansion canceling step: step S34 in FIG. 39). When the jig main body 481 cancels expansion of the gaps, the inserted second vibration suppression members 14B contact the heat transfer tubes 5 by being sandwiched by the heat transfer tubes 5. Further, as illustrated in FIG. 38, the jig main body 481 is smaller than the gaps between the heat transfer tubes 5, and then the jig main body 481 is pulled out from the gaps between the heat transfer tubes 5 in this state (jig pulling-out step: step S35 in FIG. 39). By this means, disposing the second vibration suppression members 14B is finished. By repeating these steps, a plurality of second vibration suppression members 14B is disposed.

As described above, according to the configuration of the twelfth embodiment, in addition to the existing first vibration suppression members 14A, the second vibration suppression members 14B can be newly arranged using the gap expansion jig 480. In this case, the gap expansion jig 480 can suitably insert the jig main body 481 such that the jig main body 481 is inserted in the gaps between the heat transfer tubes 5 and the short sides of the jig main body 481 are in the direction in which the heat transfer tubes 5 face each other. Then, the gap between the heat transfer tubes 5 can be expanded such that the jig main body 481 is rotated with respect to the gaps between the heat transfer tubes 5 and the long sides of the jig main body 481 are in the direction in which the heat transfer tubes 5 face each other. Further, in the state in which the gaps between the heat transfer tubes 5 are expanded, it is possible to insert the second vibration suppression members 14B in the gaps between the heat transfer tubes 5, and suitably insert the second vibration suppression members 14B. Consequently, the inserted second vibration suppression members 14B can contact each heat transfer tube 5, and can suitably suppress vibration of each heat transfer tube 5. Consequently, the steam generator 210 can reduce abrasion at contact portions between the heat transfer tubes 5 and the vibration suppression members 14.

Further, according to the configuration of the twelfth embodiment, the cross section of the jig main body 481 cut in the plane orthogonal to the longitudinal direction can be formed into the rectangular shape. Hence, the gaps between the heat transfer tubes 5 are expanded and become maximum in the diagonal line of the rectangular shape of the jig main body 481, and then are slightly narrowed in the long sides of the rectangular shape of the jig main body 481. Consequently, a portion in the diagonal line of the rectangular shape of the jig main body 481 which has the lengths in the long sides of the rectangular shape in the direction in which the heat transfer tubes 5 face each other functions as a stopper, and employs a configuration in which rotation of the jig main body 481 hardly reverses.

Further, according to the configuration of the twelfth embodiment, the angular portions of the rectangular shape in the cross section of the jig main body 481 orthogonal to the longitudinal direction can be formed as curved surfaces, so that it is possible to rotate the jig main body 481 without, for example, damaging the heat transfer tubes 5.

Furthermore, according to the configuration of the twelfth embodiment, in the direction in which the neighboring heat transfer tubes 5 face each other, the second vibration suppression members 14B are formed to the same degree as or slightly broader than the gaps between the heat transfer tubes 5 before expansion and are formed shorter than the lengths of the long sides of the jig main body 481. In other words, the lengths of the long sides of the jig main body 481 are longer than the second vibration suppression members 14B in the direction in which the heat transfer tubes face each other. Consequently, it is possible to suitably insert the second vibration suppression members 14B in the gaps between the heat transfer tubes 5

Further, according to the configuration of the twelfth embodiment, by performing expansion canceling step S34 before jig pulling-out step S35, it is possible to cancel sandwiching of the jig main body 481 between the heat transfer tubes 5 and, consequently, easily pull out the jig main body 481 in jig pulling-out step S35.

In addition, although the cross section of the jig main body 481 cut in the plane orthogonal to the longitudinal direction is rectangular in the twelfth embodiment, the jig main body is not limited to this configuration. For example, the cross section of the jig main body 481 cut in the plane orthogonal to the longitudinal direction may be elliptic. In this case, by rotating the jig main body 481, the long axis (long portion) and the short axis (short portion) of the ellipse may be transitioned in the direction in which the heat transfer tubes 5 face each other. That is, any shape may be adopted as long as the shape allows a short portion of a shorter outer dimension and a long portion of a longer outer dimension to transition in the cross section of the jig main body 481 by rotating the jig main body 481.

Further, although expansion canceling step S34 is executed in the twelfth embodiment, the present invention is not limited to this configuration, and jig pulling-out step S35 may be executed without executing expansion canceling step S34.

### [Thirteenth Embodiment]

Next, a gap expansion jig 500 according to a thirteenth embodiment, which is not claimed and is included for illustrative purposes, will be described with reference to FIG. 40. In addition, in the thirteenth embodiment, only different portions from the twelfth embodiment will be described to avoid disclosure which overlaps the twelfth embodiment. FIG. 40 is a schematic configuration diagram schematically illustrating a gap expansion jig according to the thirteenth embodiment. A gap expansion jig 500 according to the thirteenth embodiment employs a configuration of providing an operation member 502 to a jig main body 481 according to the twelfth embodiment. Next, the gap expansion jig 500 according to the thirteenth embodiment will be described with reference to FIG. 40.

As illustrated in FIG. 40, the gap expansion jig 500 according to the thirteenth embodiment has a jig main body 501 and the operation member 502. In addition, the jig main body 501 employs the same configuration as that in the twelfth embodiment, and therefore will not be described. The operation member 502 is attached to one side end portion of the jig main body 501 in the longitudinal direction, and is directed to operating the jig main body 501. The operation member 502 is formed into a T shape by a portion which extends in the longitudinal direction from the jig main body 501 and a portion which is orthogonal to the longitudinal direction. Consequently, by operating the operation member 502, it is possible to insert the jig main body 501 in the gaps between the heat transfer tubes 5 and rotate the jig main body 501.

As described above, according to the configuration of the thirteenth embodiment, it is possible to rotate the jig main body 501 by operating the operation member 502, and easily and manually rotate the jig main body 501. Further, it is possible to insert the jig main body 501 in the gaps between the heat transfer tubes 5 by operating the operation member 502, and, consequently, suitably handle the jig main body 501 even in, for example, underwater environment.

### [Fourteenth Embodiment]

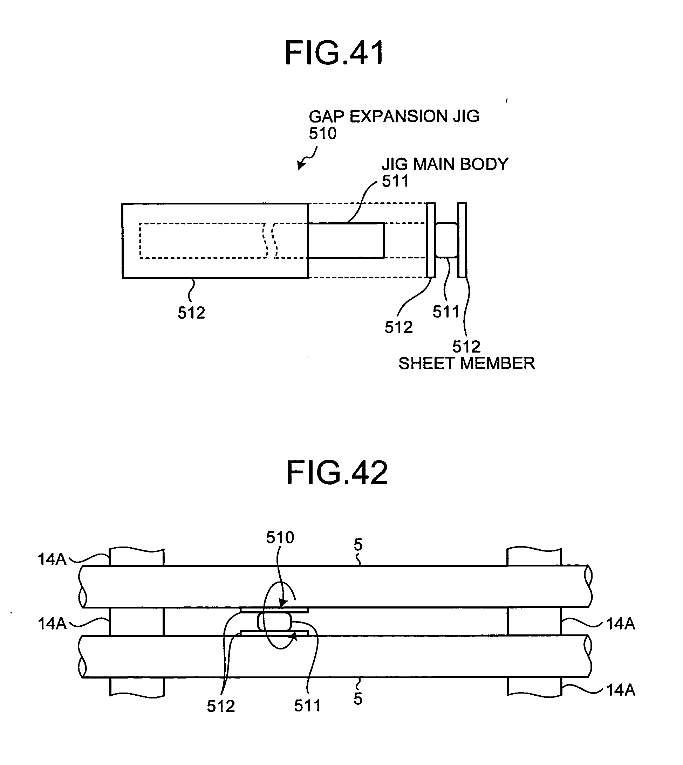

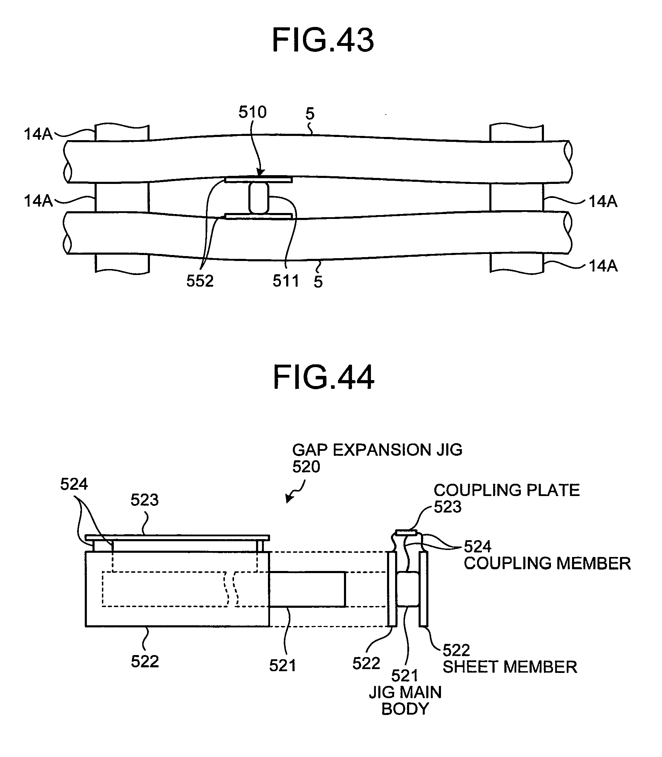

Next, a gap expansion jig 510 according to a fourteenth embodiment, which is not claimed and is included for illustrative purposes, will be described with reference to FIGS. 41 to 43. In addition, in the fourteenth embodiment, too, only different portions from the twelfth embodiment will be described to avoid disclosure which overlaps the twelfth embodiment. FIG. 41 is a schematic configuration diagram schematically illustrating a gap expansion jig according to the fourteenth embodiment. FIGS. 42 and 43 are explanatory views of examples related to the method of disposing vibration suppression members using the gap expansion jig according to the fourteenth embodiment. The gap expansion jig 510 according to the fourteenth embodiment has a pair of sheet members 512 between a jig main body 481 according to the twelfth embodiment and heat transfer tubes 5 on both sides of the jig main body 481. Hereinafter, the gap expansion jig 510 according to the fourteenth embodiment will be described with reference to FIGS. 41 to 43.

As illustrated in FIG. 41, the gap expansion jig 510 according to the fourteenth embodiment has a jig main body 511 and a pair of sheet members 512. In addition, the jig main body 511 employs the same configuration as that in the twelfth embodiment, and therefore will not be described. A pair of sheet members 512 is provided between heat transfer tubes 5 and the jig main body 511 in the direction in which the heat transfer tubes 5 face each other, and are disposed in parallel. The sheet member 512 is made of, for example, a metal of a flat shape or reinforcement fibers formed into a flat shape, and can protect the heat transfer tubes 5. The sheet members 512 are provided along the longitudinal direction of the jig main body 511, and are arranged such that one side end portion of the jig main body 511 is exposed. Consequently, by exposing one side end portion of the jig main body 511, the jig main body 511 can rotate the one side end portion of the jig main body 511 without being blocked by the sheet members 512. The sheet members 512 are formed broad such that the jig main body 511 does not go away from the sheet members 512 upon rotation of the jig main body 511. That is, the sheet member 512 is longer than the lengths of the long sides of the jig main body 511 in a direction orthogonal to the direction in which the heat transfer tubes 5 face each other.

As illustrated in FIG. 42, the gap expansion jig 510 formed in this way inserts the jig main body 511 in predetermined gaps between the heat transfer tubes 5 in jig inserting step S31 such that the short sides of the jig main body 511 are in the direction in which the heat transfer tubes 5 face each other. In this case, together with the jig main body 511, a pair of sheet members 512 is inserted at positions between the heat transfer tubes 5 and the jig main body 511.

Further, as illustrated in FIG. 43, in gap expanding step S32, when the jig main body 511 is rotated, in the direction in which the heat transfer tubes 5 face each other, the length of the jig main body 511 transitions from the lengths of the short sides of the rectangular shape to the lengths of the long sides of the rectangular shape. In addition, although not illustrated, in expansion canceling step S34, when the jig main body 511 is rotated, in the direction in which the heat transfer tubes 5 face each other, the length of the jig main body 511 transitions from the lengths of the long sides of the rectangular shape to the lengths of the short sides of the rectangular shape.

As described above, according to the configuration of the fourteenth embodiment, it is possible to protect the heat transfer tubes 5 by means of a pair of sheet members 512 and rotate the jig main body 511 without, for example, damaging the heat transfer tubes 5.

### [Fifteenth Embodiment]

Next, a gap expansion jig 520 according to a fifteenth embodiment, which is not claimed and is included for illustrative purposes, will be described with reference to FIG. 44. In addition, in the fifteenth embodiment, only different portions from the fourteenth embodiment will be described to avoid disclosure which overlaps the fourteenth embodiment. FIG. 44 is a schematic configuration diagram schematically illustrating a gap expansion jig according to the fifteenth embodiment. A gap expansion jig 520 according to the fifteenth embodiment has a coupling mechanism in a gap expansion jig 510 according to the fourteenth embodiment. Next, the gap expansion jig 520 according to the fifteenth embodiment will be described with reference to FIG. 44.

The gap expansion jig 520 according to the fifteenth embodiment has a jig main body 521, sheet members 522, and a coupling mechanism of a coupling plate 523 and coupling members 524. In addition, the jig main body 521 and the sheet members 522 employ the same configurations as those in the fourteenth embodiment, and therefore will not be described. The coupling plate 523 is provided in the longitudinal direction along a pair of sheet members 522. The coupling members 524 are formed in string shapes, and connect the coupling plate 523 and the jig main body 521 and connect the coupling plate 523 and a pair of sheet members 522. The coupling members 524 connect, for example, both end portions of the jig main body 521 in the longitudinal direction and both end portions of the coupling plate 523 in the longitudinal direction. Similarly, the coupling members 524 connect, for example, both end portions of the sheet members 522 in the longitudinal direction and the both end portions of the coupling plate 523 in the longitudinal direction.

In this case, the coupling plate 523 and the coupling members 524 are positioned without to blocking rotation of the jig main body 521. The coupling plate 523 and the coupling members 524 couple the jig main body 521 and a pair of sheet members 522 such that a pair of sheet members 522 is arranged on both sides of the jig main body 521.

As described above, according to the configuration of the fifteenth embodiment, the coupling plate 523 and the coupling members 524 can couple the jig main body 521 and a pair of sheet members 522, so that it is possible to integrally handle the jig main body 521 and a pair of sheet members 522 without being scattered and prevent the sheet members 522 from, for example, dropping.

### [Sixteenth Embodiment]

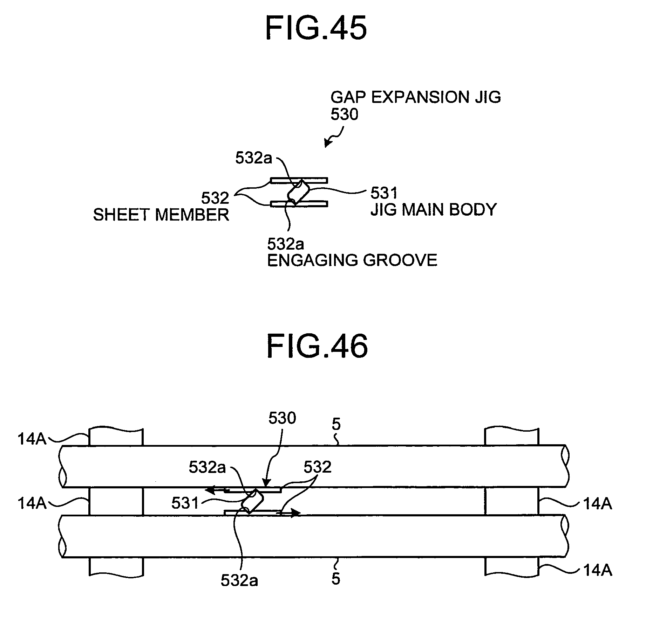

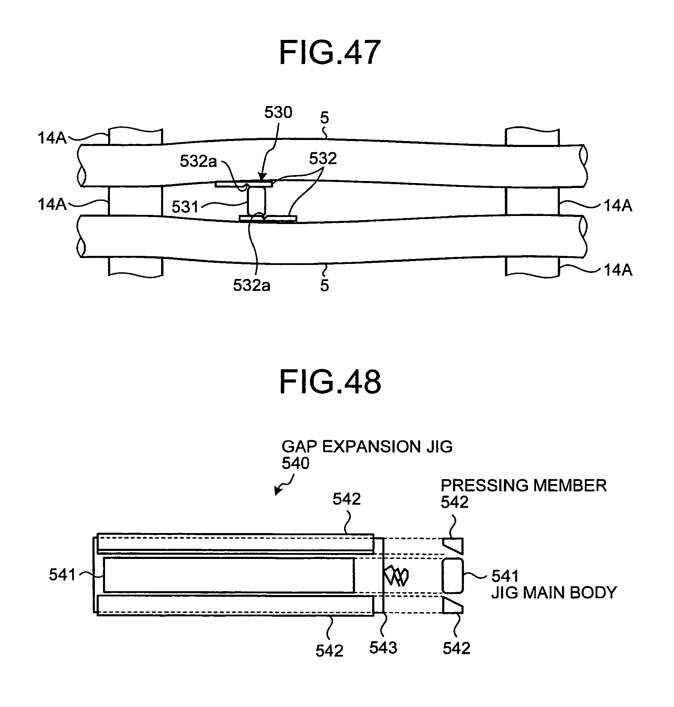

Next, a gap expansion jig 530 according to a sixteenth embodiment, which is not claimed and is included for illustrative purposes, will be described with reference to FIGS. 45 to 47. In addition, in the sixteenth embodiment, only different portions from the fourteenth embodiment will be described to avoid disclosure which overlaps the fourteenth embodiment. FIG. 45 is a schematic configuration diagram schematically illustrating a gap expansion jig according to the sixteenth embodiment. FIGS. 46 and 47 are explanatory views of examples related to the method of disposing the vibration suppression members using the gap expansion jig according to the sixteenth embodiment. The gap expansion jig 530 according to the sixteenth embodiment has engaging grooves 532a formed in sheet members 512 of a gap expansion jig 510 according to the fourteenth embodiment. Next, the gap expansion jig 530 according to the sixteenth embodiment will be described with reference to FIGS. 45 to 47.

As illustrated in FIG. 45, the gap expansion jig 530 according to the sixteenth embodiment has a jig main body 531 and a plurality of sheet members 532. In addition, the jig main body 531 employs the same configuration as that in the fourteenth embodiment, and therefore will not be described. Further, a pair of sheet members 532 employs substantially the same configuration as that in the fourteenth embodiment, and has the engaging grooves 532a formed in a plane which the jig main body 531 contacts. The engaging groove 532a is a groove formed in a V shaped in a cross section cut in the longitudinal direction such that an angular portion of the jig main body 531 which has a rectangular cross section cut in the longitudinal direction fits. The engaging groove 532a is formed extending in the longitudinal direction.

The jig main body 531 according to the sixteenth embodiment is handled in a state in which the jig main body engages with the engaging grooves 532a of a pair of sheet members 532. Hence, the jig main body 531 is diagonally arranged such that, in the cross section cut in the longitudinal direction, an angle formed between a pair of parallel sheet members 532 and long sides (or short sides) of the jig main body 531 is a predetermined inclined angle. In this case, the jig main body 531 is arranged diagonally with respect to a pair of sheet members 532 such that the jig main body is shorter than the lengths of gaps in the direction in which the heat transfer tubes 5 face each other.

As illustrated in FIG. 46, in jig inserting step S31, the gap expansion jig 530 formed in this way is inserted together with a pair of sheet members 532 in a state in which the jig main body 531 is diagonally arranged.

Further, as illustrated in FIG. 47, in gap expanding step S32, the jig main body 531 is rotated and a pair of sheet members 532 is moved. More specifically, in gap expanding step S32, a pair of sheet members 532 is moved in a counter direction of a direction orthogonal to the direction in which the heat transfer tubes 5 face each other such that the short sides of the jig main body 531 and each sheet member 532 come closer (contact). By this means, the jig main body 531 is rotated in the direction in which the heat transfer tubes 5 face each other such that the jig main body 531 has the lengths of the long sides of the rectangular shape.

As described above, according to the configuration of the sixteenth embodiment, a pair of sheet members 532 protects the heat transfer tubes 5 and a pair of sheet members 532 is moved, so that it is possible to support rotation of the jig main body 531 and, consequently, easily rotate the jig main body 531.

### [Seventeenth Embodiment]

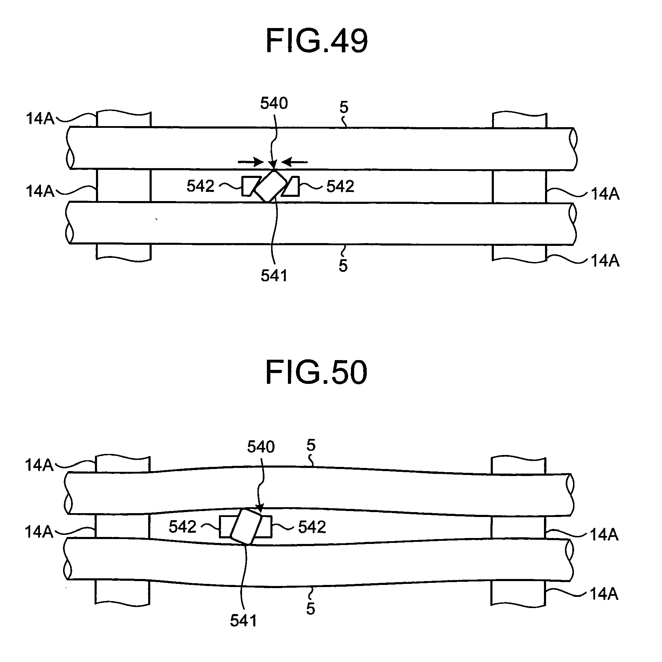

Next, a gap expansion jig 540 according to the seventeenth embodiment, which is not claimed and is included for illustrative purposes, will be described with reference to FIGS. 48 to 51. In addition, in the seventeenth embodiment, only different portions from the twelfth embodiment will be described to avoid disclosure which overlaps the twelfth embodiment. FIG. 48 is a schematic configuration diagram schematically illustrating a gap expansion jig according to the seventeenth embodiment. FIGS. 49 to 51 are explanatory views of examples related to the method of disposing the vibration suppression members using the gap expansion jig according to the seventeenth embodiment. The gap expansion jig 540 according to the seventeenth embodiment has a rotation support mechanism which supports rotation of a gap expansion jig 480 according to the twelfth embodiment. Next, the gap expansion jig 540 according to the seventeenth embodiment will be described with reference to FIGS. 48 to 51.

As illustrated in FIG. 48, the gap expansion jig 540 according to the seventeenth embodiment has a jig main body 541 and the rotation support mechanism of a pair of pressing members 542 and a fastening member 543. In addition, the jig main body 541 employs the same configuration as that in the first embodiment, and therefore will not be described. A pair of pressing members 542 is provided on both sides of the jig main body 541 in a direction orthogonal to the direction in which the heat transfer tubes 5 face each other. The pressing members 542 are made of metal such as steel or reinforced plastic, and are provided along the longitudinal direction of the jig main body 541. The pressing member 542 has a trapezoidal cross section cut in the plane orthogonal to the longitudinal direction, and surfaces which face the jig main body 541 are inclined surfaces with respect to the short sides of the jig main body 541. In this case, the inclined surfaces of a pair of pressing members 542 are parallel to each other.

The fastening member 543 is made of a string body such as a steel wire, and is disposed along the periphery of a pair of pressing members 542 provided on both sides of the jig main body 541. More specifically, on surfaces on sides opposite to the inclined surfaces of the pressing members 542, accommodation grooves which accommodate the fastening member 543 are formed extending in the longitudinal direction. Further, by placing the string-shaped fastening member 543 in the accommodation grooves of a pair of pressing members 542, the fastening member 543 is arranged surrounding a pair of pressing members 542. Furthermore, the inclined surfaces of a pair of pressing members 542 are pressed against the jig main body 541 by fastening this fastening member 543, it is possible to fix the jig main body 541 while rotating the jig main body along the inclined surfaces of a pair of pressing members 542.

In the seventeenth embodiment, the jig main body 541 before fastening by the fastening member 543 is handled in a state in which the jig main body is sandwiched by a pair of pressing members 542. Hence, the jig main body 541 is diagonally arranged such that, in the cross section cut in the longitudinal direction, an angle formed between the heat transfer tubes 5 and long sides of the jig main body 541 is a predetermined inclined angle. In this case, the jig main body 541 is arranged diagonally with respect to the heat transfer tubes 5 such that the jig main body is shorter than the lengths of gaps in the direction in which the heat transfer tubes 5 face each other.

As illustrated in FIG. 49, in jig inserting step S31, the gap expansion jig 540 formed in this way is inserted together with a pair of pressing members 542 in a state in which the jig main body 541 is diagonally arranged.

Further, as illustrated in FIG. 50, in gap expanding step S32, a pair of pressing members 542 rotates the jig main body 541 by fastening the fastening member 543. More specifically, by fastening the fastening member 543, the jig main body is rotated such that the short sides of the jig main body 541 and the heat transfer tubes 5 come close (contact). Subsequently, in gap expanding step S32, by further fastening the fastening member 543, the jig main body 541 is fixed along the inclined surfaces of a pair of pressing members 542.

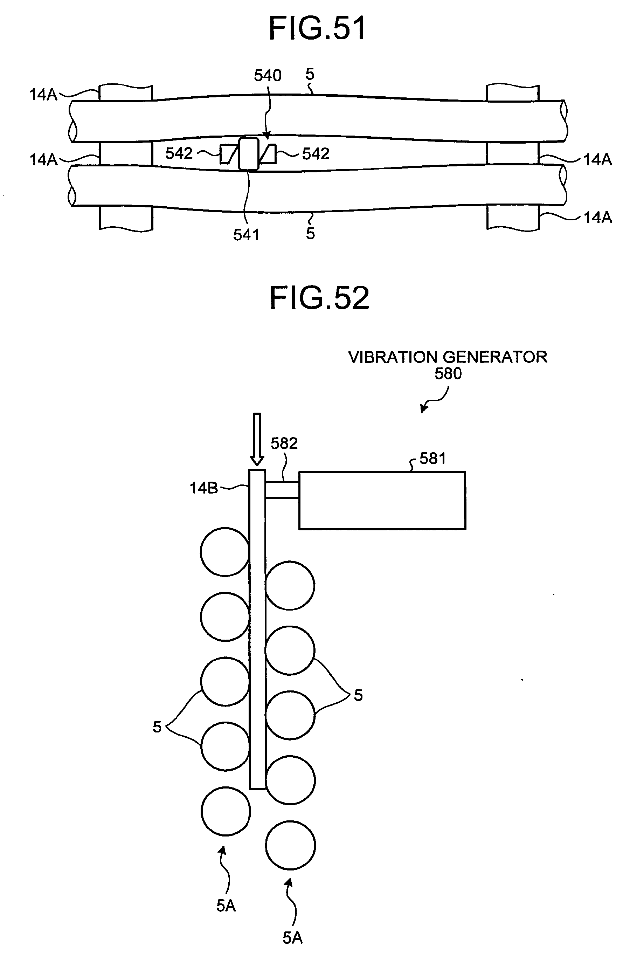

Further, as illustrated in FIG. 51, by canceling fastening by the fastening member 543, the jig main body 541 is rotated such that the lengths of the long sides of the rectangular shape are in the direction in which the heat transfer tubes 5 face each other. That is, when fixing of the jig main body 541 by a pair of pressing members 542 is canceled, the jig main body is rotated such that the long sides of the rectangular shape of the jig main body 541 are in the direction in which the heat transfer tubes 5 face each other.

Meanwhile, in expansion canceling step S34, a pair of pressing members 542 rotates the jig main body 541 by fastening the fastening member 543 again. More specifically, by fastening the fastening member 543, the jig main body is rotated such that the short sides of the jig main body 541 and the heat transfer tubes 5 are separated. Subsequently, in expansion canceling step S34, by further fastening the fastening member 543, the jig main body 541 is fixed along the inclined surfaces of a pair of pressing members 542. Further, by canceling fastening by the fastening member 543, the jig main body 541 is rotated such that the lengths of the short sides of the rectangular shape are in the direction in which the heat transfer tubes 5 face each other. At this time, the jig main body 541 may be rotated.

As described above, according to the configuration of the seventeenth embodiment, by fastening the fastening member 543, a pair of pressing members 542 presses both sides of the jig main body 541 and rotates the jig main body 541, so that it is possible to easily rotate the jig main body 541 by a simple configuration.

In addition, although, in the seventeenth embodiment, by fastening the fastening member 543, the jig main body 541 is fixed along the inclined surfaces of a pair of pressing members 542, the present disclosure is not limited to this configuration. That is, by fastening the fastening member 543 and pressing a pair of pressing members 542 against the jig main body 541, the jig main body 541 may be rotated such that the long sides of the jig main body 541 are in the direction in which the heat transfer tubes 5 face without fixing the jig main body.

Further, configurations of gaps expansion jigs 480, 500, 510, 520, 530 and 540 disclosed in the twelfth to seventeenth embodiments may be adequately combined.

### [Eighteenth Embodiment]

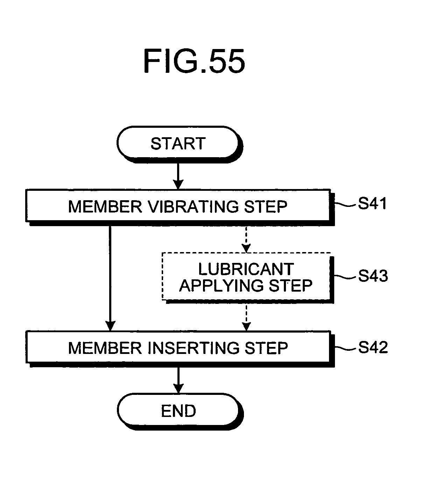

Next, a method of disposing vibration suppression members 14 according to an eighteenth embodiment, which is not claimed and is included for illustrative purposes, will be described with reference to FIGS. 52 to 55. In addition, in the eighteenth embodiment, only different portions from the first embodiment will be described to avoid disclosure which overlaps the first embodiment. FIG. 52 is an explanatory view illustrating a method of inserting vibration suppression members according to the eighteenth embodiment, and FIG. 55 is a flowchart related to a method of inserting the vibration suppression members. More specifically, the method of disposing vibration members 14 is an insertion method of inserting second vibration suppression members 14B in gaps between heat transfer tube layers 5A. As illustrated in FIG. 52, the second vibration suppression members 14B are inserted in the gaps between the neighboring heat transfer tube layers 5A. A vibration generator 580 is abutting on the second vibration suppression members 14B to be inserted.

The vibration generator 580 has an apparatus main body 581 and a vibrator 582 which is vibrated by the apparatus main body 581. The vibrator 582 is disposed projecting from the apparatus main body 581, and the second vibration suppression members 14B abut on a front end of the vibrator in a projection direction. The apparatus main body 581 vibrates the vibrator 582 back and forth in the projection direction, and causes, for example, ultrasonic vibration of the vibrator 582.

This vibration generator 580 has the front end of the vibrator 582 abut on the second vibration suppression members 14B such that the projection direction of the vibrator 582 is the direction orthogonal to the insertion direction (longitudinal direction) of the second vibration suppression members 14B. Consequently, the vibration generated by the vibration generator 580 becomes vibration of a lateral wave traveling in the insertion direction of the second vibration suppression members 14B.

Next, a method of inserting the second vibration suppression members 14B will be described. First, when the second vibration suppression members 14B are inserted in the gaps between the heat transfer tube layers 5A, the front end of the vibrator 582 contacts the second vibration suppression members 14B such that the projection direction of the vibrator 582 of the vibration generator 580 and the insertion direction of the second vibration suppression members 14B are orthogonal. By this means, the vibration generator 580 vibrates the second vibration suppression members 14B (member vibrating step: step S41 in FIG. 55).

Subsequently, the second vibration suppression members 14B are inserted toward the centers of the curvature radii of the heat transfer tubes 5 in the radial direction manually or by an apparatus in a state in which the second vibration suppression members are vibrated by the vibration generator 580 (member inserting step: step S42 in FIG. 55).

As described above, according to the configuration of the eighteenth embodiment, it is possible to insert vibration suppression members in the gaps between the heat transfer tubes 5 while vibrating the second vibration suppression members 14B which are newly and additionally provided. Consequently, the second vibration suppression members 14B can reduce abrasion caused by the heat transfer tubes 5 upon insertion by way of vibration, so that it is possible to easily insert the second vibration suppression members 14B in the gaps between the heat transfer tubes 5.

Further, according to the configuration of the eighteenth embodiment, by inserting the second vibration suppression members 14B in the gaps between the heat transfer tubes while vibrating the second vibration suppression members, it is possible to insert the second vibration suppression members 14B broader than the first vibration suppression members 14A. Consequently, when the first vibration suppression members 14A and the second vibration suppression members 14B are disposed in the gaps between the heat transfer tubes 5, the second vibration suppression members 14B can push out the gaps compared to the first vibration suppression members 14A, that is, press the heat transfer tubes 5 compared to the first vibration suppression members 14A. Consequently, the second vibration suppression members 14B which are newly and additionally provided can actively press the heat transfer tubes 5, and suitably suppress vibration of each heat transfer tube 5.

Further, according to the configuration of the eighteenth embodiment, the insertion direction of the second vibration suppression members 14B and the projection direction of the vibrator 582 of the vibration generator 580 are orthogonal, so that vibration generated by the vibration generator 580 becomes vibration of a lateral wave traveling in the insertion direction of the second vibration suppression members 14B. Consequently, it is possible to suitably vibrate the second vibration suppression members 14B and suitably reduce friction with the heat transfer tubes 5.

### [Nineteenth Embodiment]

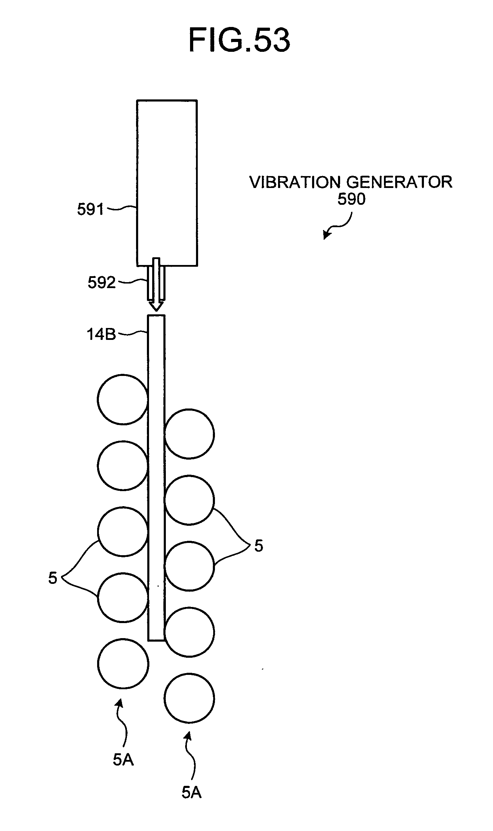

Next, a method of inserting vibration suppression members according to a nineteenth embodiment, which is not claimed and is included for illustrative purposes, will be described with reference to FIGS. 53 to 55. In addition, in the nineteenth embodiment, only different portions from the eighteenth embodiment will be described to avoid disclosure which overlaps the eighteenth embodiment. FIG. 53 is an explanatory view illustrating a method of inserting vibration suppression members according to the nineteenth embodiment. Although, with a vibration suppression member inserting method according to the eighteenth embodiment, the insertion direction of second vibration suppression members 14B and a projection direction of a vibrator 582 of the vibration generator 580 are orthogonal, with the vibration suppression member inserting method according to the nineteenth embodiment, the insertion direction of the second vibration suppression members 14B and the projection direction of a vibrator 592 of a vibration generator 590 are an identical direction. The vibration suppression member inserting method according to the nineteenth embodiment will be described with reference to FIG. 53.

As illustrated in FIG. 53, the vibration generator 590 has an apparatus main body 591 and the vibrator 592 which is vibrated by the apparatus main body 591. The vibrator 592 is disposed projecting from the apparatus main body 591, and the second vibration suppression members 14B abut on a front end of the vibrator in the projection direction. The apparatus main body 591 vibrates the vibrator 592 back and forth in the projection direction, and causes, for example, ultrasonic vibration of the vibrator 592. Further, the apparatus main body 591 is applies a load in the projection direction of the vibrator 592 at a predetermined cycle.

This vibration generator 590 has the front end of the vibrator 592 abut on rear end portions of the second vibration suppression members 14B in the insertion direction such that the projection direction of the vibrator 592 is the direction identical to the insertion direction (longitudinal direction) of the second vibration suppression members 14B. Consequently, the vibration generated by the vibration generator 590 becomes vibration of a longitudinal wave traveling in the insertion direction of the second vibration suppression members 14B.

Next, a method of inserting the second vibration suppression members 14B will be described. First, when the second vibration suppression members 14B are inserted in the gaps between the heat transfer tube layers 5A, the front end of the vibrator 592 contacts the rear end portions of the second vibration suppression members 14B in the insertion direction such that the projection direction of the vibrator 592 of the vibration generator 590 and the insertion direction of the second vibration suppression members 14B are identical. In this case, the vibration generator 590 is positioned above the second vibration suppression members 14B, and a load of the vibration generator 590 is applied to the second vibration suppression members 14B. Further, the vibration generator 590 vibrates the second vibration suppression members 14B (member vibrating step: step S41 in FIG. 55).

Subsequently, while, in a state in which the load of the vibration generator 590 is applied to the second vibration suppression members 14B, the vibration generator 590 vibrates the second vibration suppression members and cyclically applies the load to the rear end portions of the second vibration suppression member 14B, the second vibration suppression members 14B are pushed in toward the center of the curvature radii of the heat transfer tubes 5 in the radial direction (member inserting step: step S42 in FIG. 55).

As described above, according to the configuration of the nineteenth embodiment, the insertion direction of the second vibration suppression members 14B and the projection direction of the vibrator 592 of the vibration generator 590 are identical, so that vibration generated by the vibration generator 590 becomes vibration of a longitudinal wave traveling in the insertion direction of the second vibration suppression members 14B. Consequently, in the plane orthogonal to the insertion direction of the second vibration suppression members 14B, it is possible to cyclically stretch and contract the second vibration suppression members 14B and suitably reduce friction with the heat transfer tubes 5.

Further, according to the configuration of the nineteenth embodiment, the vibration generator 590 can cyclically apply a load to the rear end portions of the second vibration suppression members 14B in a state in which the vibration generator 590 applies the load to the second vibration suppression members 14B, it is possible to easily push the second vibration suppression members 14B in the gaps between the heat transfer tubes 5 and facilitates an operation of inserting the second vibration suppression members 14B.

### [Twentieth Embodiment]

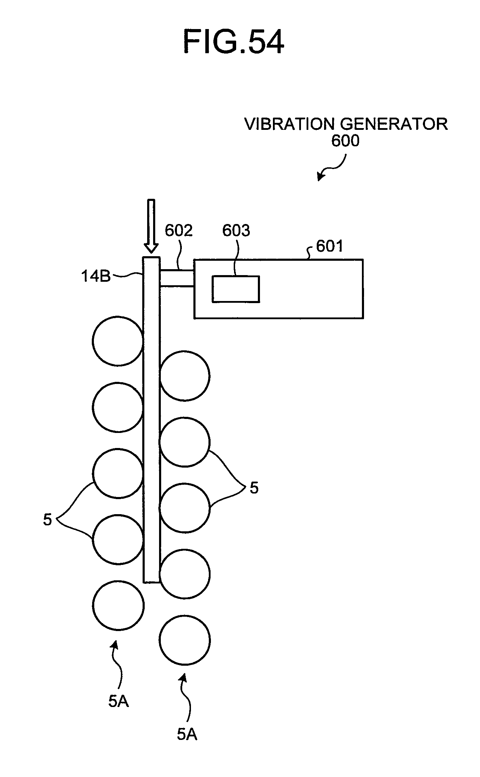

Next, a vibration suppression member inserting method according to a twentieth embodiment, which is not claimed and is included for illustrative purposes, will be described with reference to FIGS. 54 and 55. In addition, in the twentieth embodiment, too, only different portions from the eighteenth embodiment will be described to avoid disclosure which overlaps the eighteenth embodiment. FIG. 54 is an explanatory view illustrating the vibration suppression member inserting method according to the twentieth embodiment. In the vibration suppression member inserting method according to the twentieth embodiment, a lubricant is applied to the second vibration suppression members 14B. The vibration suppression member inserting method according to the twentieth embodiment will be described with reference to FIG. 54.

As illustrated in FIG. 54, a vibration generator 600 has an apparatus main body 601 and a vibrator 602 which is vibrated by the apparatus main body 601. The vibrator 602 is disposed projecting from the apparatus main body 601, and the second vibration suppression members 14B abut on a front end of the vibrator in a projection direction. The apparatus main body 601 vibrates the vibrator 602 back and forth in the projection direction, and causes, for example, ultrasonic vibration of the vibrator 602. Further, the apparatus main body 601 has a lubricant applying mechanism 603 which applies a lubricant to contact surfaces of the second vibration suppression members 14B which heat transfer tubes 5 contact. Although, for example, water is used for the lubricant, the present disclosure is not limited to this, grease or a lubricant oil may be used and the lubricant is not limited in particular as long as the lubricant reduces friction with the heat transfer tubes 5. In addition, the lubricant applying mechanism 603 may apply the lubricant to the contact surfaces of the second vibration suppression members 14B by, for example, having an applying roller contact the contact surfaces, or spray the lubricant by means of a spray without contact.

This vibration generator 600 has the front end of the vibrator 602 abut on rear end portions of the second vibration suppression members 14B in the insertion direction such that the projection direction of the vibrator 602 is the direction orthogonal to the insertion direction (longitudinal direction) of the second vibration suppression members 14B. Consequently, the vibration generated by the vibration generator 600 becomes vibration of a lateral wave traveling in the insertion direction of the second vibration suppression members 14B.

Next, a method of inserting the second vibration suppression members 14B will be described. First, when the second vibration suppression members 14B are inserted in the gaps between the heat transfer tube layers 5A, the front end of the vibrator 602 contacts the second vibration suppression members 14B such that the projection direction of the vibrator 602 of the vibration generator 600 and the insertion direction of the second vibration suppression members 14B are orthogonal. Further, the vibration generator 600 vibrates the second vibration suppression members 14B (member vibrating step: step S41 in FIG. 55).

Subsequently, the vibration generator 600 applies the lubricant to the contact surfaces of the second vibration suppression members 14B by means of the lubricant applying mechanism 603 (lubricant applying step: step S43 indicated by dotted lines in FIG. 55). Further, the second vibration suppression members 14B are pushed in toward the center of the curvature radii of the heat transfer tubes 5 in the radial direction while the second vibration suppression members are vibrated by the vibration generator 600 (member inserting step: step S42 in FIG. 55). In addition, the lubricant applying step S43 may be performed at the same time when member inserting step S42 is performed.

As described above, according to the configuration of the twentieth embodiment, upon insertion of the second vibration suppression members 14B, it is possible to apply the lubricant to the second vibration suppression members 14B, so that the second vibration suppression members 14B can reduce friction caused by heat transfer tubes upon insertion by means of the lubricant and the second vibration suppression members 14B can be easily inserted in gaps between heat transfer tubes.

In addition, although, in the eighteenth to twentieth embodiments, vibration generators 580, 590 and 600 cause ultrasonic vibration of the second vibration suppression members 14B, the present disclosure is not limited to this, and any vibration may be caused as long as the vibration can reduce friction with the heat transfer tubes 5. Further, although the second vibration suppression members 14B which are newly and additionally provided are vibrated in the eighteenth and twentieth embodiments, any vibration suppression members may be used as long as the vibration suppression members are inserted in gaps between the heat transfer tubes 5.

Furthermore, the configurations disclosed in the first to twentieth embodiments may be adequately combined. For example, the second vibration suppression members 14B disposed in a heat transfer tube bundle 51 disclosed in the first to fifth embodiments may be disposed according to the vibration suppression member disposing methods disclosed in the sixth to twentieth embodiments.

### Reference Signs List

1 STEAM GENERATOR
2 BODY PORTION
3 TUBE BUNDLE SHROUD
4 TUBE SHEET
5 HEAT TRANSFER TUBE
5A HEAT TRANSFER TUBE LAYER
6 TUBE SUPPORT PLATE
7 CHANNEL HEAD
8 PARTITION WALL
9 STEAM WATER SEPARATOR
10 MOISTURE SEPARATOR
11 WATER SUPPLY TUBE
12 STEAM VENT
14 VIBRATION SUPPRESSION MEMBER
14A FIRST VIBRATION SUPPRESSION MEMBER
14B SECOND VIBRATION SUPPRESSION MEMBER
15A JOINT MEMBER
15B JOINT MEMBER
16A RETAINING MEMBER
16B RETAINING MEMBER
17 ATTACHMENT MEMBER
51 HEAT TRANSFER TUBE BUNDLE
71 INLET CHAMBER
72 OUTLET CHAMBER
74 INLET NOZZLE
75 OUTLET NOZZLE
80 STEAM GENERATOR (SECOND EMBODIMENT)
81 SECOND VIBRATION SUPPRESSION MEMBER (SECOND EMBODIMENT)
90 STEAM GENERATOR (THIRD EMBODIMENT)
100 STEAM GENERATOR (FOURTH EMBODIMENT)
101 SECOND VIBRATION SUPPRESSION MEMBER (FOURTH EMBODIMENT)
110 STEAM GENERATOR (FIFTH EMBODIMENT)
111 VIBRATION SUPPRESSION MEMBER (FIFTH EMBODIMENT)
111A FIRST VIBRATION SUPPRESSION MEMBER (FIFTH EMBODIMENT)
111B SECOND VIBRATION SUPPRESSION MEMBER (FIFTH EMBODIMENT)
210 STEAM GENERATOR (SIXTH EMBODIMENT)
280 GAP EXPANSION JIG (SIXTH EMBODIMENT)
281 JIG MAIN BODY (SIXTH EMBODIMENT)
281a BENT PORTION (SIXTH EMBODIMENT)
281b END PORTION (SIXTH EMBODIMENT)
282 HEATER (SIXTH EMBODIMENT)
300 GAP EXPANSION JIG (SEVENTH EMBODIMENT)
301 JIG MAIN BODY (SEVENTH EMBODIMENT)
302 FLAT HEATER (SEVENTH EMBODIMENT)
310 GAP EXPANSION JIG (EIGHTH EMBODIMENT)
311 JIG MAIN BODY (EIGHTH EMBODIMENT)
311a BENT PORTION (EIGHTH EMBODIMENT)
311b END PORTION (EIGHTH EMBODIMENT)
320 GAP EXPANSION JIG (NINTH EMBODIMENT)
321 JIG MAIN BODY (NINTH EMBODIMENT)
321a BENT PORTION (NINTH EMBODIMENT)
321b END PORTION (NINTH EMBODIMENT)
325 ACCOMMODATION GROOVE (NINTH EMBODIMENT)
330 GAP EXPANSION JIG (TENTH EMBODIMENT)
331 JIG MAIN BODY (TENTH EMBODIMENT)
332 FLAT HEATER (TENTH EMBODIMENT)
340 GAP EXPANSION JIG (ELEVENTH EMBODIMENT)
341 JIG MAIN BODY (ELEVENTH EMBODIMENT)
342 FLAT HEATER (ELEVENTH EMBODIMENT)
480 GAP EXPANSION JIG (TWELFTH EMBODIMENT)
481 JIG MAIN BODY (TWELFTH EMBODIMENT)
500 GAP EXPANSION JIG (THIRTEENTH EMBODIMENT)
501 JIG MAIN BODY (THIRTEENTH EMBODIMENT)
502 OPERATION MEMBER (THIRTEENTH EMBODIMENT)
510 GAP EXPANSION JIG (FOURTEENTH EMBODIMENT)
511 JIG MAIN BODY (FOURTEENTH EMBODIMENT)
512 SHEET MEMBER (FOURTEENTH EMBODIMENT)
520 GAP EXPANSION JIG (FIFTEENTH EMBODIMENT)
521 JIG MAIN BODY (FIFTEENTH EMBODIMENT)
522 SHEET MEMBER (FIFTEENTH EMBODIMENT)
523 COUPLING PLATE (FIFTEENTH EMBODIMENT)
524 COUPLING MEMBER (FIFTEENTH EMBODIMENT)
530 GAP EXPANSION JIG (SIXTEENTH EMBODIMENT)
531 JIG MAIN BODY (SIXTEENTH EMBODIMENT)
532 SHEET MEMBER (SIXTEENTH EMBODIMENT)
532a ENGAGING GROOVE (SIXTEENTH EMBODIMENT)
540 GAP EXPANSION JIG (SEVENTEENTH EMBODIMENT)
541 JIG MAIN BODY (SEVENTEENTH EMBODIMENT)
542 PRESSING MEMBER (SEVENTEENTH EMBODIMENT)
543 FASTENING MEMBER (SEVENTEENTH EMBODIMENT)
580 VIBRATION GENERATOR (EIGHTEENTH EMBODIMENT)
581 APPARATUS MAIN BODY (EIGHTEENTH EMBODIMENT)
582 VIBRATOR (EIGHTEENTH EMBODIMENT)
590 VIBRATION GENERATOR (NINETEENTH EMBODIMENT)
591 APPARATUS MAIN BODY (NINETEENTH EMBODIMENT)
592 VIBRATOR (NINETEENTH EMBODIMENT)
600 VIBRATION GENERATOR (TWENTIETH EMBODIMENT)
601 APPARATUS MAIN BODY (TWENTIETH EMBODIMENT)
602 VIBRATOR (TWENTIETH EMBODIMENT)
603 LUBRICANT APPLYING MECHANISM (TWENTIETH EMBODIMENT)

## Claims

1. A gap expansion jig for heat transfer tubes (5), wherein said jig is configured to expand a gap between neighboring heat transfer tubes (5) so as to allow insertion of a vibration suppression member (14) which suppresses vibration of the heat transfer tubes (5) in the gap,
**characterized in that**:
the gap expansion jig includes:
a jig main body (281; 301; 311; 321; 331; 341; 481; 501; 511; 521; 531; 541) which includes a shape memory material and which is configured to be arranged in the gap between the neighboring heat transfer tubes (5) and to expandably deform in the gap by being heated; and
a temperature adjusting unit (282; 302; 332; 342) which can adjust a temperature of the jig main body (281; 301; 311; 321; 331; 341; 481; 501; 511; 521; 531; 541), wherein the jig main body (281; 301; 311; 321; 331; 341; 481; 501; 511; 521; 531; 541) is configured to be smaller than the gap before heating by the temperature adjusting unit (282; 302; 332; 342), and is configured to become larger than the gap after heating by the temperature adjusting unit (282; 302; 332; 342).

2. The gap expansion jig according to claim 1, wherein
the jig main body (281; 301; 311; 321; 331; 341; 481; 501; 511; 521; 531; 541) extends in a longitudinal direction, and is bent in a center of a width direction orthogonal to the longitudinal direction, and
the temperature adjusting unit (282; 302; 332; 342) widens in the width direction both end portions of the jig main body (281; 301; 311; 321; 331; 341; 481; 501; 511; 521; 531; 541) in the width direction by heating the jig main body (281; 301; 311; 321; 331; 341; 481; 501; 511; 521; 531; 541).

3. The gap expansion jig according to claim 2, wherein
the temperature adjusting unit (282; 302; 332; 342) is a heater provided along the longitudinal direction of the jig main body (281; 301; 311; 321; 331; 341; 481; 501; 511; 521; 531; 541), and
the heater is provided inside a bent portion formed by bending the jig main body (281; 301; 311; 321; 331; 341; 481; 501; 511; 521; 531; 541).

4. The gap expansion jig according to claim 2, wherein
the temperature adjusting unit (282; 302; 332; 342) is a flat heater comprising flexibility and a thin flat shape, and
the flat heater is provided over an entire inner side of the bent jig main body.

5. The gap expansion jig according to any one of claims 2 to 4, wherein both end portions of the jig main body (281; 301; 311; 321; 331; 341; 481; 501; 511; 521; 531; 541) in the width direction are formed in a curved surface.

6. The gap expansion jig according to any one of claims 2 to 5, wherein the jig main body (281; 301; 311; 321; 331; 341; 481; 501; 511; 521; 531; 541) comprises an accommodation groove (325) which is formed at one end portion in at least the width direction and which can accommodate the heat transfer tube (5).

7. A method of disposing a vibration suppression member (14) which suppresses vibration of a heat transfer tube (5) in a gap between neighboring heat transfer tubes (5) using the gap expansion jig for heat transfer tubes (5) according to any one of claims 1 to 6, the method comprising:
a jig inserting step of inserting the gap expansion jig in the gap between the neighboring heat transfer tubes (5);
a gap expansion step of heating the jig main body (281; 301; 311; 321; 331; 341; 481; 501; 511; 521; 531; 541) by the temperature adjusting unit (282; 302; 332; 342) and expanding the gap by the jig main body (281; 301; 311; 321; 331; 341; 481; 501; 511; 521; 531; 541);
a member inserting step of inserting the vibration suppression member (14) in the expanded gap;
an expansion canceling step of cooling the jig main body (281; 301; 311; 321; 331; 341; 481; 501; 511; 521; 531; 541) and canceling the expansion of the gap by the jig main body (281; 301; 311; 321; 331; 341; 481; 501; 511; 521; 531; 541); and
a jig pulling-out step of pulling the gap expansion jig out of the gap.

## Patentansprüche

1. Fugendehnungsvorrichtung für Wärmeübertragungsrohre (5), wobei die Vorrichtung dazu ausgebildet ist, eine Fuge zwischen benachbarten Wärmeübertragungsrohren (5) aufzudehnen, um das Einführen eines Schwingungsdämpfungsgliedes (14) zu ermöglichen, das Schwingungen der Wärmeübertragungsrohre (5) in der Fuge unterdrückt,
**dadurch gekennzeichnet, dass**:
die Fugendehnungsvorrichtung umfasst:
einen Vorrichtungshauptkörper (281; 301; 311; 321; 331; 341; 481; 501; 511; 521; 531; 541), der einen Formgedächtniswerkstoff umfasst und der dazu ausgebildet ist, in der Fuge zwischen den benachbarten Wärmeübertragungsrohren (5) angeordnet zu werden und sich in der Fuge durch Erwärmen ausdehnbar zu verformen, und
eine Temperatureinstelleinheit (282; 302; 332; 342), die eine Temperatur des Vorrichtungshauptkörpers (281; 301; 311; 321; 331; 341; 481; 501; 511; 521; 531; 541) einstellen kann, wobei der Vorrichtungshauptkörper (281; 301; 311; 321; 331; 341; 481; 501; 511; 521; 531; 541) dazu ausgebildet ist, vor dem Erwärmen durch die Temperatureinstelleinheit (282; 302; 332; 342) kleiner als die Fuge zu sein, und dazu ausgebildet ist, nach dem Erwärmen durch die Temperatureinstelleinheit (282; 302; 332; 342) größer als die Fuge zu werden.

2. Fugendehnungsvorrichtung nach Anspruch 1, wobei
der Vorrichtungshauptkörper (281; 301; 311; 321; 331; 341; 481; 501; 511; 521; 531; 541) sich in einer Längsrichtung erstreckt und in einer Mitte einer Breitenrichtung, die im rechten Winkel zu der Längsrichtung verläuft, gebogen ist, und
die Temperatureinstelleinheit (282; 302; 332; 342) beide Endabschnitte des Vorrichtungshauptkörpers (281; 301; 311; 321; 331; 341; 481; 501; 511; 521; 531; 541) in der Breitenrichtung durch Erwärmen des Vorrichtungshauptkörpers (281; 301; 311; 321; 331; 341; 481; 501; 511; 521; 531; 541) in der Breitenrichtung aufweitet.

3. Fugendehnungsvorrichtung nach Anspruch 2, wobei
die Temperatureinstellvorrichtung (282; 302; 332; 342) eine Heizvorrichtung ist, die entlang der Längsrichtung des Vorrichtungshauptkörpers (281; 301; 311; 321; 331; 341; 481; 501; 511; 521; 531; 541) vorgesehen ist, und
die Heizvorrichtung innerhalb eines gebogenen Abschnitts vorgesehen ist, der durch Biegen des Vorrichtungshauptkörpers (281; 301; 311; 321; 331; 341; 481; 501; 511; 521; 531; 541) gebildet wird.

4. Fugendehnungsvorrichtung nach Anspruch 2, wobei
die Temperatureinstelleinheit (282; 302; 332; 342) eine flache Heizvorrichtung ist, die Flexibilität und eine dünne flache Form umfasst, und
die flache Heizvorrichtung über einer gesamten Innenseite des gebogenen Vorrichtungshauptkörpers vorgesehen ist.

5. Fugendehnungsvorrichtung nach einem beliebigen der Ansprüche 2 bis 4, wobei beide Endabschnitte des Vorrichtungshauptkörpers (281; 301; 311; 321; 331; 341; 481; 501; 511; 521; 531; 541) in der Breitenrichtung mit einer gekrümmten Oberfläche ausgebildet sind.

6. Fugendehnungsvorrichtung nach einem beliebigen der Ansprüche 2 bis 5, wobei der Vorrichtungshauptkörper (281; 301; 311; 321; 331; 341; 481; 501; 511; 521; 531; 541) eine Aufnahmenut (325) umfasst, die an einem Endabschnitt in mindestens der Breitenrichtung ausgebildet ist und die das Wärmeübertragungsrohr (5) aufnehmen kann.

7. Verfahren zum Anordnen eines Schwingungsdämpfungsgliedes (14), das Schwingungen eines Wärmeübertragungsrohres (5) unterdrückt, in einer Fuge zwischen benachbarten Wärmeübertragungsrohren (5) mittels der Fugendehnungsvorrichtung für Wärmeübertragungsrohre (5) nach einem beliebigen der Ansprüche 1 bis 6, wobei das Verfahren umfasst:
einen Vorrichtungseinführschritt des Einführens der Fugendehnungsvorrichtung in die Fuge zwischen den benachbarten Wärmeübertragungsrohren (5),
einen Fugendehnschritt des Erwärmens des Vorrichtungshauptkörpers (281; 301; 311; 321; 331; 341; 481; 501; 511; 521; 531; 541) mittels der Temperatureinstelleinheit (282; 302; 332; 342) und des Aufdehnens der Fuge mittels des Vorrichtungshauptkörpers (281; 301; 311; 321; 331; 341; 481; 501; 511; 521; 531; 541),
einen Gliedeinführschritt des Einführens des Schwingungsdämpfungsglieds (14) in die aufgedehnte Fuge,
einen Dehnungsaufhebungsschritt des Kühlens des Vorrichtungshauptkörpers (281; 301; 311; 321; 331; 341; 481; 501; 511; 521; 531; 541) und des Aufhebens der Dehnung der Fuge durch den Vorrichtungshauptkörper (281; 301; 311; 321; 331; 341; 481; 501; 511; 521; 531; 541), und
einen Vorrichtungsherausziehschritt des Herausziehens der Fugendehnungsvorrichtung aus der Fuge.

## Revendications

1. Gabarit d'expansion d'espace pour des tubes de transfert de chaleur (5), dans lequel ledit gabarit est configuré pour augmenter un espace entre des tubes de transfert de chaleur voisins (5) de façon à permettre une insertion d'un élément de suppression de vibration (14) qui supprime une vibration des tubes de transfert de chaleur (5) dans l'espace,
**caractérisé en ce que** :
le gabarit d'expansion d'espace comprend :
un corps principal de gabarit (281 ; 301 ; 311 ; 321 ; 331 ; 341 ; 481 ; 501 ; 511 ; 521 ; 531 ; 541) qui comprend une matériau à mémoire de forme et qui est configuré pour être disposé dans l'espace entre les tubes de transfert de chaleur voisins (5) et pour se déformer de manière expansible dans l'espace en étant chauffé ; et
une unité d'ajustement de température (282 ; 302 ; 332 ; 342) qui peut ajuster une température du corps principal de gabarit (281 ; 301 ; 311 ; 321 ; 331 ; 341 ; 481 ; 501 ; 511 ; 521 ; 531 ; 541), dans lequel le corps principal de gabarit (281 ; 301 ; 311 ; 321 ; 331 ; 341 ; 481 ; 501 ; 511 ; 521 ; 531 ; 541) est configuré pour être plus petit que l'espace avant chauffage par l'unité d'ajustement de température (282 ; 302 ; 332 ; 342), et est configuré pour devenir plus grand que l'espace après chauffage par l'unité d'ajustement de température (282 ; 302 ; 332 ; 342).

2. Gabarit d'expansion d'espace selon la revendication 1, dans lequel
le corps principal de gabarit (281 ; 301 ; 311 ; 321 ; 331 ; 341 ; 481 ; 501 ; 511 ; 521 ; 531 ; 541) s'étend dans une direction longitudinale, et est plié au niveau d'un centre d'une direction de largeur perpendiculaire à la direction longitudinale, et
l'unité d'ajustement de température (282 ; 302 ; 332 ; 342) élargit dans la direction de largeur les deux parties d'extrémité du corps principal de gabarit (281 ; 301 ; 311 ; 321 ; 331 ; 341 ; 481 ; 501 ; 511 ; 521 ; 531 ; 541) dans la direction de largeur en chauffant le corps principal de gabarit (281 ; 301 ; 311 ; 321 ; 331 ; 341 ; 481 ; 501 ; 511 ; 521 ; 531 ; 541).

3. Gabarit d'expansion d'espace selon la revendication 2, dans lequel l'unité d'ajustement de température (282 ; 302 ; 332 ; 342) est un dispositif de chauffage prévu le long de la direction longitudinale du corps principal de gabarit (281 ; 301 ; 311 ; 321 ; 331 ; 341 ; 481 ; 501 ; 511 ; 521 ; 531 ; 541), et
le dispositif de chauffage est prévu à l'intérieur d'une partie cintrée formée en pliant le corps principal de gabarit (281 ; 301 ; 311 ; 321 ; 331 ; 341 ; 481 ; 501 ; 511 ; 521 ; 531 ; 541).

4. Gabarit d'expansion d'espace selon la revendication 2, dans lequel
l'unité d'ajustement de température (282 ; 302 ; 332 ; 342) est un dispositif de chauffage plat comportant une flexibilité et une forme plate mince, et
le dispositif de chauffage plat est prévu au-dessus d'un côté intérieur complet du corps principal de gabarit plié.

5. Gabarit d'expansion d'espace selon l'une quelconque des revendications 2 à 4, dans lequel les deux parties d'extrémité du corps principal de gabarit (281 ; 301 ; 311 ; 321 ; 331 ; 341 ; 481 ; 501 ; 511 ; 521 ; 531 ; 541) dans la direction de largeur sont formées dans une surface courbe.

6. Gabarit d'expansion d'espace selon l'une quelconque des revendications 2 à 5, dans lequel le corps principal de gabarit (281 ; 301 ; 311 ; 321 ; 331 ; 341 ; 481 ; 501 ; 511 ; 521 ; 531 ; 541) comporte une rainure de réception (325) qui est formée au niveau d'une partie d'extrémité dans au moins la direction de largeur et qui peut recevoir le tube de transfert de chaleur (5).

7. Procédé de disposition d'un élément de suppression de vibration (14) qui supprime une vibration d'un tube de transfert de chaleur (5) dans un espace entre des tubes de transfert de chaleur voisins (5) en utilisant le gabarit d'expansion d'espace pour des tubes de transfert de chaleur (5) selon l'une quelconque des revendications 1 à 6, le procédé comportant :
une étape d'insertion de gabarit en insérant le gabarit d'expansion d'espace dans l'espace entre les tubes de transfert de chaleur voisins (5) ;
une étape d'expansion d'espace en chauffant le corps principal de gabarit (281 ; 301 ; 311 ; 321 ; 331 ; 341 ; 481 ; 501 ; 511 ; 521 ; 531 ; 541) grâce à l'unité d'ajustement de température (282 ; 302 ; 332 ; 342) et en agrandissant l'espace grâce au corps principal de gabarit (281 ; 301 ; 311 ; 321 ; 331 ; 341 ; 481 ; 501 ; 511 ; 521 ; 531 ; 541) ;
une étape d'insertion d'élément en insérant l'élément de suppression de vibration (14) dans l'espace agrandi ;
une étape d'annulation d'expansion en refroidissant le corps principal de gabarit (281 ; 301 ; 311 ; 321 ; 331 ; 341 ; 481 ; 501 ; 511 ; 521 ; 531 ; 541) et en annulant l'expansion de l'espace grâce au corps principal de gabarit (281 ; 301 ; 311 ; 321 ; 331 ; 341 ; 481 ; 501 ; 511 ; 521 ; 531 ; 541) ; et
une étape de retrait de gabarit en tirant le gabarit d'expansion d'espace hors de l'espace.
